# EUROPEAN PATENT SPECIFICATION

(11) **EP 3 361 763 B1**
(45) Date of publication and mention of the grant of the patent: **12.08.2020**
(21) Application number: 15907033.3
(22) Date of filing: 31.10.2015
(51) Int. Cl.: H04W 12/04, H04L 29/06, H04L 9/08

(54) **SENB KEY UPDATE METHOD AND DEVICE**
SENB-SCHLÜSSEL-AKTUALISIERUNGSVERFAHREN UND -VORRICHTUNG
PROCÉDÉ ET DISPOSITIF DE MISE À JOUR DE CLÉ DE SENB

(43) Date of publication of application: 15.08.2018
(73) Proprietor: Huawei Technologies Co., Ltd., Longgang District Shenzhen, Guangdong 518129 (CN)
(72) Inventor: CHEN, Jing, Shenzhen Guangdong 518129 (CN); ZHANG, Lijia, Shenzhen Guangdong 518129 (CN); GUO, Jingjing, Beijing 100082 (CN)
(74) Representative: Gill Jennings & Every LLP
(86) International application number: PCT/CN2015/093530
(87) International publication number: WO 2017/070972

(56) References cited:
- WO-A2-2015/155599
- CN-A- 104 768 152
- CN-A- 104 936 174
- CN-A- 104 936 175
- US-A1- 2015 163 202
- SAMSUNG ET AL: "Security aspects of SCE architecture 1A", 3GPP DRAFT; S3-140565_SCE_KEYHANDLING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Sophia Antipolis (France); 20140331 - 20140402 1 April 2014 (2014-04-01), XP050837414, Retrieved from the Internet: URL:http://www.3gpp.org/ftp/tsg_sa/WG3_Sec urity/TSGS3_74b_Sophia/Docs/ [retrieved on 2014-04-01]
- ZTE: 'Clarification on S-KeNB Change Triggered by SeNB' 3GPP TSG-RAN WG3#85BIS, R3-142254 26 September 2014, XP050870767
- ERICSSON: 'Interaction of SeNB and MeNB Initiated ScNB Modification Procedure' 3GPP TSG-RAN WG3 MEETING #86, R3-142927 21 November 2014, XP050878055
- HUAWEI ET AL.: 'Key Refresh Initiated by SeNB' 3GPPTSG SA WG3 (SECURITY) MEETING #74BIS, S 3-140356 02 April 2014, XP050837446

## Description

### TECHNICAL FIELD

The present invention relates to the field of communications technologies, and in particular, to an SeNB key update method and apparatus.

### BACKGROUND

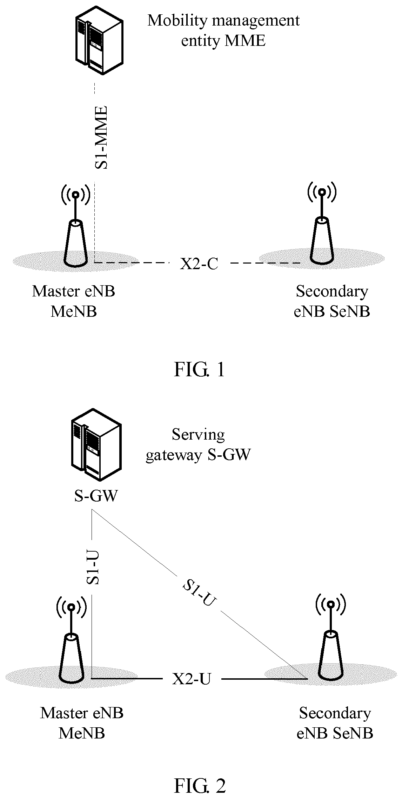

3GPP TS 36.300 describes a support feature of an evolved Universal Mobile Telecommunications System (Universal Mobile Telecommunications System, UMTS) terrestrial radio access network (Evolved UMTS Territorial Radio Access Network, E-UTRAN) for dual connectivity. After configuring multiple Rx/Tx (Rx/Tx) interfaces, user equipment (User Equipment, UE) in a Radio Resource Control (Radio Resource Control, RRC) connection status may simultaneously use air interface resources that are provided by two evolved node base stations (Evolved Node Basestation, eNB) in different locations. The two eNBs are connected by using an X2 interface. FIG. 1 shows a control plane signaling procedure in a dual connectivity mode. An S1-mobility management entity (S1-Mobile Management Entity, S1-MME) interface terminates at a master eNB (Master eNB, MeNB), and an X2 interface is used between the MeNB and a secondary eNB (Secondary eNB, SeNB). Each dual connectivity mode has only one S1-MME connection, and each eNB may independently process service and signaling requests of the UE. FIG. 2 shows a user plane data procedure in a dual connectivity mode, allowing two architectures: (1) S1-U terminates only at the MeNB, and user plane data is transmitted between the MeNB and the SeNB by using an X2-U interface; (2) the S1-U interface may also terminate at the SeNB.

In the prior art, in a procedure of key generation, update or encryption and decryption between one UE, one SeNB, and one MeNB, the MeNB maintains one key (set as an M-KeNB) and one SCG counter (SCG counter) as input parameters to generate a new key (set as an S-KeNB). The MeNB separately sends the S-KeNB to the UE and the SeNB and uses the S-KeNB as an input parameter to generate a data stream encryption key Kupenc. When the S-KeNB needs to perform update, the MeNB increases the SCG counter and separately sends an S-KeNB update procedure request to the UE and the SeNB. When the M-KeNB needs to perform update, an operation of the MeNB is to reset the SCG counter to 0 and perform an S-KeNB update procedure.

The prior art is intended only for a case in which the UE is connected to a single SeNB and a single MeNB. However, the UE may also be simultaneously connected to N SeNBs. When n (n≤N) SeNBs request to the MeNB for S-KeNB key update, the prior art does not provide an implementation of sending a key update request to the N SeNBs connected to the UE. Alternatively, in the prior art, data may be transmitted multiple times only in a manner of data transmission between UE and its connected single SeNB and single MeNB, that is, the MeNB needs to send key update signaling to same UE n times. An increase of N leads to higher air interface resource consumption, increasing control plane signaling interaction.
Security aspects of SCE architecture which address key stream repetition issues are disclosed in SAMSUNG ET AL: "Security aspects of SCE architecture 1 A", 3GPP DRAFT; S3-140565_SCE_KEYHANDLING, 1 April 2014, XP050837 414.

### SUMMARY

The invention is defined in the appended independent claims. Embodiments of the present invention provide an SeNB key update method and apparatus, and provide a key update procedure in a multi-SeNB scenario, so as to reduce times of control plane signaling interaction between an MeNB and UE, improve key update efficiency, and enhance user experience of key update.

A first aspect of the embodiments of the present invention provides an SeNB key update method, where the method may include:
establishing, by a master eNB MeNB, a Radio Resource Control RRC connection to user equipment UE, and determining a first secondary eNB SeNB and a second SeNB that are connected to the UE;
calculating, by the MeNB, a key S-KeNB1 of the first SeNB and a key S-KeNB2 of the second SeNB, and sending an SeNB addition request to the first SeNB and the second SeNB, where the addition request to the first SeNB carries the S-KeNB1 and the addition request to the second SeNB carries the S-KeNB2;
receiving, by the MeNB, a first request acknowledgment message corresponding to the SeNB addition request that is fed back by the first SeNB, and receiving a second request acknowledgment message corresponding to the SeNB addition request that is fed back by the second SeNB; and
sending, by the MeNB, an RRC reconfiguration request to the UE according to the first request acknowledgment message and the second request acknowledgment message, where the RRC reconfiguration request carries key update information of the first SeNB and key update information of the second SeNB, so as to trigger the UE to perform key update; wherein the sending, by the MeNB, an RRC reconfiguration request to the UE according to the first request acknowledgment message and the second request acknowledgment message comprises:
   obtaining, by the MeNB, the key update information of the first SeNB from the first request acknowledgment message, and obtaining the key update information of the second SeNB from the second request acknowledgment message; and
   adding, by the MeNB, the key update information of the first SeNB and the key update information of the second SeNB to the RRC reconfiguration request, and sending the RRC reconfiguration request to the UE, wherein
      the RRC reconfiguration request is used to trigger the UE to calculate the S-KeNB1 and a data stream encryption key Kupenc1 corresponding to the first SeNB, and the S-KeNB2 and a data stream encryption decryption key Kupenc2 corresponding to the second SeNB, so as to activate an encryption and decryption procedure.

With reference to the first aspect, in a first possible implementation, the calculating, by the MeNB, a key S-KeNB1 of the first SeNB and a key S-KeNB2 of the second SeNB includes:
obtaining, by the MeNB, a secondary cell group SCG counter and an MeNB key M-KeNB, and using a counting value of the SCG counter and the M-KeNB as input parameters, to calculate the key S-KeNB1 of the first SeNB and the key S-KeNB2 of the second SeNB, where
the S-KeNB1 is used to generate a data stream encryption key Kupenc1 corresponding to the first SeNB, and the S-KeNB2 is used to generate a data stream encryption key Kupenc2 corresponding to the second SeNB.

With reference to the first possible implementation of the first aspect, in a second possible implementation, the using a counting value of the SCG counter and the M-KeNB as input parameters, to calculate the key S-KeNB1 of the first SeNB and the key S-KeNB2 of the second SeNB includes:
obtaining a first counting value of the SCG counter, and calculating the S-KeNB1 with reference to the M-KeNB; and
obtaining a second counting value of the SCG counter, and calculating the S-KeNB2 with reference to the M-KeNB.

With reference to any one of the first aspect to the second possible implementation of the first aspect, in a third possible implementation, the using a counting value of the SCG counter and the M-KeNB as input parameters, to calculate the key S-KeNB1 of the first SeNB and the key S-KeNB2 of the second SeNB includes:
obtaining a first counting value of the SCG counter, and calculating the S-KeNB1 with reference to the M-KeNB; and
obtaining a second counting value of the SCG counter, and calculating the S-KeNB2 with reference to the M-KeNB.

With reference to the fourth possible implementation of the first aspect, in a fifth possible implementation, the key update information of the first SeNB includes: a first air interface resource allocated by the first SeNB, first encryption algorithm version information selected by the first SeNB, and the first counting value of the SCG counter and the M-KeNB that are used to calculate the S-KeNB1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

A second aspect of the embodiments of the present invention provides an SeNB key update method, where the method may include:
establishing, by user equipment UE, a Radio Resource Control RRC connection to a master eNB MeNB, and establishing a connection to a first secondary eNB SeNB and a second SeNB;
receiving, by the UE, an RRC reconfiguration request sent by the MeNB, where the RRC reconfiguration request carries key update information of the first SeNB and key update information of the second SeNB; and
performing, by the UE, key update for the first SeNB and key update for the second SeNB according to the key update information of the first SeNB and the key update information of the second SeNB.

With reference to the second aspect, in a first possible implementation, the key update information of the first SeNB includes: a first air interface resource allocated by the first SeNB, first encryption algorithm version information selected by the first SeNB, and the first counting value of the SCG counter and the M-KeNB that are used to calculate the S-KeNB 1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

With reference to the first possible implementation of the second aspect, in a second possible implementation, the performing, by the UE, key update for the first SeNB and key update for the second SeNB according to the key update information of the first SeNB and the key update information of the second SeNB includes:
calculating, by the UE, the key S-KeNB 1 of the first SeNB according to the first counting value of the SCG counter and the M-KeNB that are carried in the key update information of the first SeNB;
calculating, by the UE, the key S-KeNB2 of the second SeNB according to the second counting value of the SCG counter and the M-KeNB that are carried in the key update information of the second SeNB;
calculating, by the UE, a data stream encryption key Kupenc1 corresponding to the first SeNB according to the first encryption algorithm version information and the S-KeNB1 that are carried in the key update information of the first SeNB;
calculating, by the UE, a data stream encryption key Kupenc2 corresponding to the second SeNB according to the second encryption algorithm version information and the S-KeNB2 that are carried in the key update information of the second SeNB; and
performing, by the UE, the key update for the first SeNB according to the S-KeNB1 and the Kupenc1, and performing the key update for the second SeNB according to the S-KeNB2 and the Kupenc2.

A third aspect of the embodiments of the present invention provides an SeNB key update apparatus, where the apparatus may include:
a connection module, configured to establish a Radio Resource Control RRC connection to user equipment UE;
a determining module, configured to determine a first secondary eNB SeNB and a second SeNB that are connected to the UE;
a calculation module, configured to calculate a key S-KeNB1 of the first SeNB determined by the determining module and a key S-KeNB2 of the second SeNB determined by the determining module;
a sending module, configured to send an SeNB addition request to the first SeNB and the second SeNB, where the addition request to the first SeNB carries the S-KeNB1 and the addition request to the second SeNB carries the S-KeNB2; and
a receiving module, configured to: receive a first request acknowledgment message corresponding to the SeNB addition request that is fed back by the first SeNB, and receive a second request acknowledgment message corresponding to the SeNB addition request that is fed back by the second SeNB; where
the sending module is further configured to send an RRC reconfiguration request to the UE according to the first request acknowledgment message and the second request acknowledgment message, where the RRC reconfiguration request carries key update information of the first SeNB and key update information of the second SeNB, so as to trigger the UE to perform key update; wherein the sending module (40) is specifically configured to:
obtain the key update information of the first SeNB from the first request acknowledgment message, and obtain the key update information of the second SeNB from the second request acknowledgment message; and
add the key update information of the first SeNB and the key update information of the second SeNB to the RRC reconfiguration request, and send the RRC reconfiguration request to the UE, wherein
   the RRC reconfiguration request is used to trigger the UE to calculate the S-KeNB1 and a data stream encryption key Kupenc1 corresponding to the first SeNB, and the S-KeNB2 and a data stream encryption decryption key Kupenc2 corresponding to the second SeNB, so as to activate an encryption and decryption procedure.

With reference to the third aspect, in a first possible implementation, the calculation module is specifically configured to:
obtain a secondary cell group SCG counter and an MeNB key M-KeNB, and use a counting value of the SCG counter and the M-KeNB as input parameters, to calculate the key S-KeNB1 of the first SeNB and the key S-KeNB2 of the second SeNB, where
the S-KeNB1 is used to generate a data stream encryption key Kupenc1 corresponding to the first SeNB, and the S-KeNB2 is used to generate a data stream encryption key Kupenc2 corresponding to the second SeNB.

With reference to the first possible implementation of the third aspect, in a second possible implementation, the calculation module is specifically configured to:
obtain a first counting value of the SCG counter, and calculate the S-KeNB1 with reference to the M-KeNB; and
obtain a second counting value of the SCG counter, and calculate the S-KeNB2 with reference to the M-KeNB.

With reference to any one of the third aspect to the second possible implementation of the third aspect, in a third possible implementation, the sending module is specifically configured to:
send a first SeNB addition request to the first SeNB by using an X2-C interface, where the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, where the second SeNB addition request carries the security capability of the UE and the S-KeNB2, so as to trigger the second SeNB to calculate the data stream encryption decryption key Kupenc2 according to the security capability of the UE and the S-KeNB2.

With reference to any one of the third aspect to the third possible implementation of the third aspect, in a fourth possible implementation, the sending module is specifically configured to:
send a first SeNB addition request to the first SeNB by using an X2-C interface, where the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, where the second SeNB addition request carries the security capability of the UE and the S-KeNB2, so as to trigger the second SeNB to calculate the data stream encryption decryption key Kupenc2 according to the security capability of the UE and the S-KeNB2.

With reference to the fourth possible implementation of the third aspect, in a fifth possible implementation, the key update information of the first SeNB includes: a first air interface resource allocated by the first SeNB, first encryption algorithm version information selected by the first SeNB, and the first counting value of the SCG counter and the M-KeNB that are used to calculate the S-KeNB1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

A fourth aspect of the embodiments of the present invention provides an SeNB key update apparatus, where the apparatus may include:
a connection module, configured to: establish a Radio Resource Control RRC connection to a master eNB MeNB, and establish a connection to a first secondary eNB SeNB and a second SeNB;
a receiving module, configured to receive an RRC reconfiguration request sent by the MeNB, where the RRC reconfiguration request carries key update information of the first SeNB and key update information of the second SeNB; and
an update module, configured to perform key update for the first SeNB and key update for the second SeNB according to the key update information of the first SeNB received by the receiving module, and the key update information of the second SeNB received by the receiving module.

With reference to the fourth aspect, in a first possible implementation, the key update information of the first SeNB includes: a first air interface resource allocated by the first SeNB, first encryption algorithm version information selected by the first SeNB, and a first counting value of an SCG counter and the M-KeNB that are used to calculate the S-KeNB1; and
the key update information of the second SeNB includes: a second air interface resource allocated by the second SeNB, second encryption algorithm version information selected by the second SeNB, and a second counting value of the SCG counter and the M-KeNB that are used to calculate the S-KeNB2.

With reference to the first possible implementation of the fourth aspect, in a second possible implementation, the update module is specifically configured to:
calculate the key S-KeNB1 of the first SeNB according to the first counting value of the SCG counter and the M-KeNB that are carried in the key update information of the first SeNB;
calculate the key S-KeNB2 of the second SeNB according to the second counting value of the SCG counter and the M-KeNB that are carried in the key update information of the second SeNB;
calculate a data stream encryption key Kupenc1 corresponding to the first SeNB according to the first encryption algorithm version information and the S-KeNB1 that are carried in the key update information of the first SeNB;
calculate a data stream encryption key Kupenc2 corresponding to the second SeNB according to the second encryption algorithm version information and the S-KeNB2 that are carried in the key update information of the second SeNB; and
perform the key update for the first SeNB according to the S-KeNB1 and the Kupenc1, and perform the key update for the second SeNB according to the S-KeNB2 and the Kupenc2.

A fifth aspect of the embodiments of the present invention provides a base station, where the base station may include: a memory, a connector, a processor, a sender, and a receiver, where the memory is connected to the sender and the receiver, and the processor is separately connected to the memory, the connector, the sender, and the receiver;
the memory stores a set of program code; and
the sender, the receiver, and the processor are configured to invoke the program code stored in the memory, to perform the following operations:
the connector is configured to establish a Radio Resource Control RRC connection to user equipment UE;
the processor is configured to determine a first secondary eNB SeNB and a second SeNB that are connected to the UE;
the processor is further configured to calculate a key S-KeNB1 of the first SeNB and a key S-KeNB2 of the second SeNB;
the sender is configured to send an SeNB addition request to the first SeNB and the second SeNB, where the addition request carries the S-KeNB1 or the S-KeNB2;
the receiver is configured to: receive a first request acknowledgment message corresponding to the SeNB addition request that is fed back by the first SeNB, and receive a second request acknowledgment message corresponding to the SeNB addition request that is fed back by the second SeNB; and
the sender is further configured to send an RRC reconfiguration request to the UE according to the first request acknowledgment message and the second request acknowledgment message, where the RRC reconfiguration request carries key update information of the first SeNB and key update information of the second SeNB, so as to trigger the UE to perform key update.

With reference to the fifth aspect, in a first possible implementation, the processor is specifically configured to:
obtain a secondary cell group SCG counter and an MeNB key M-KeNB, and use a counting value of the SCG counter and the M-KeNB as input parameters, to calculate the key S-KeNB1 of the first SeNB and the key S-KeNB2 of the second SeNB, where
the S-KeNB1 is used to generate a data stream encryption key Kupenc1 corresponding to the first SeNB, and the S-KeNB2 is used to generate a data stream encryption key Kupenc2 corresponding to the second SeNB.

With reference to the first possible implementation of the fifth aspect, in a second possible implementation, the processor is specifically configured to:
obtain a first counting value of the SCG counter, and calculate the S-KeNB1 with reference to the M-KeNB; and
obtain a second counting value of the SCG counter, and calculate the S-KeNB2 with reference to the M-KeNB.

With reference to any one of the fifth aspect to the second possible implementation of the fifth aspect, in a third possible implementation, the sender is specifically configured to:
send a first SeNB addition request to the first SeNB by using an X2-C interface, where the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, where the second SeNB addition request carries the security capability of the UE and the S-KeNB2, so as to trigger the second SeNB to calculate the data stream encryption decryption key Kupenc2 according to the security capability of the UE and the S-KeNB2.

With reference to any one of the fifth aspect to the third possible implementation of the fifth aspect, in a fourth possible implementation, the sender is specifically configured to:
obtain the key update information of the first SeNB from the first request acknowledgment message, and obtain the key update information of the second SeNB from the second request acknowledgment message; and
add the key update information of the first SeNB and the key update information of the second SeNB to the RRC reconfiguration request, and send the RRC reconfiguration request to the UE, where
the RRC reconfiguration request is used to trigger the UE to calculate the S-KeNB1 and the data stream encryption key Kupenc1 corresponding to the first SeNB, and the S-KeNB2 and the data stream encryption decryption key Kupenc2 corresponding to the second SeNB, so as to activate an encryption and decryption procedure.

With reference to the fourth possible implementation of the fifth aspect, in a fifth possible implementation, the key update information of the first SeNB includes: a first air interface resource allocated by the first SeNB, first encryption algorithm version information selected by the first SeNB, and the first counting value of the SCG counter and the M-KeNB that are used to calculate the S-KeNB1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

A sixth aspect of the embodiments of the present invention provides user equipment, where the user equipment may include: a memory, a connector, a processor, and a receiver, where the memory is connected to the receiver, and the processor is separately connected to the memory, the connector, and the receiver;
the memory stores a set of program code; and
the receiver and the processor are configured to invoke the program code stored in the memory, to perform the following operations:
the connector is configured to: establish a Radio Resource Control RRC connection to a master eNB MeNB, and establish a connection to a first secondary eNB SeNB and a second SeNB;
the receiver is configured to receive an RRC reconfiguration request sent by the MeNB, where the RRC reconfiguration request carries key update information of the first SeNB and key update information of the second SeNB; and
the processor is configured to perform key update for the first SeNB and key update for the second SeNB according to the key update information of the first SeNB and the key update information of the second SeNB.

With reference to the sixth aspect, in a first possible implementation, the key update information of the first SeNB includes: a first air interface resource allocated by the first SeNB, first encryption algorithm version information selected by the first SeNB, and a first counting value of an SCG counter and the M-KeNB that are used to calculate the S-KeNB1; and
the key update information of the second SeNB includes: a second air interface resource allocated by the second SeNB, second encryption algorithm version information selected by the second SeNB, and a second counting value of the SCG counter and the M-KeNB that are used to calculate the S-KeNB2.

With reference to the first possible implementation of the sixth aspect, in a second possible implementation, the processor is specifically configured to:
calculate the key S-KeNB1 of the first SeNB according to the first counting value of the SCG counter and the M-KeNB that are carried in the key update information of the first SeNB;
calculate the key S-KeNB2 of the second SeNB according to the second counting value of the SCG counter and the M-KeNB that are carried in the key update information of the second SeNB;
calculate a data stream encryption key Kupenc1 corresponding to the first SeNB according to the first encryption algorithm version information and the S-KeNB1 that are carried in the key update information of the first SeNB;
calculate a data stream encryption key Kupenc2 corresponding to the second SeNB according to the second encryption algorithm version information and the S-KeNB2 that are carried in the key update information of the second SeNB; and
perform the key update for the first SeNB according to the S-KeNB1 and the Kupenc1, and perform the key update for the second SeNB according to the S-KeNB2 and the Kupenc2.

A seventh aspect of the embodiments of the present invention provides an SeNB key update system, including: the base station provided in the fifth aspect of the embodiments of the present invention, the user equipment provided in the sixth aspect of the embodiments of the present invention, and the secondary eNB SeNB that is connected to the user equipment.

In the embodiments of the present invention, the MeNB may first establish the RRC connection to the UE and determine each SeNB that is connected to the UE, and may further calculate a key S-KeNB of each SeNB. Each SeNB corresponds to one key. After calculating and obtaining the key of the SeNB, the MeNB may send the SeNB addition request to each SeNB, so as to send each key to a corresponding SeNB, and may further determine key update information of each SeNB according to a request acknowledgment message fed back by each SeNB. Further, the MeNB may add, to one RRC reconfiguration request, the key update information fed back by each SeNB, send the RRC reconfiguration request to the UE, and trigger the UE to perform key update for all the SeNBs by using one RRC reconfiguration request, so as to reduce the times of the control plane signaling interaction, reduce power consumption of the MeNB and the UE, improve key update efficiency, and enhance user experience of the key update.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a control plane signaling procedure in a dual connectivity mode in the prior art;
FIG. 2 is a user plane data procedure in a dual connectivity mode in the prior art;
FIG. 3 is a schematic interaction diagram of key update in the prior art;
FIG. 4 is a schematic diagram of a topology of a multi-connection mode according to an embodiment of the present invention;
FIG. 5 is a schematic flowchart of an embodiment of an SeNB key update method according to an embodiment of the present invention;
FIG. 6 is a schematic structural diagram of another embodiment of an SeNB key update apparatus according to an embodiment of the present invention;
FIG. 7A and FIG. 7B are a schematic interaction diagram of an embodiment of an SeNB key update method according to an embodiment of the present invention;
FIG. 8A and FIG. 8B are a schematic interaction diagram of another embodiment of an SeNB key update method according to an embodiment of the present invention;
FIG. 9 is a schematic flowchart of another embodiment of an SeNB key update method according to an embodiment of the present invention;
FIG. 10 is a schematic structural diagram of an embodiment of an SeNB key update apparatus according to an embodiment of the present invention;
FIG. 11 is a schematic structural diagram of an embodiment of a base station according to an embodiment of the present invention; and
FIG. 12 is a schematic structural diagram of an embodiment of user equipment according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

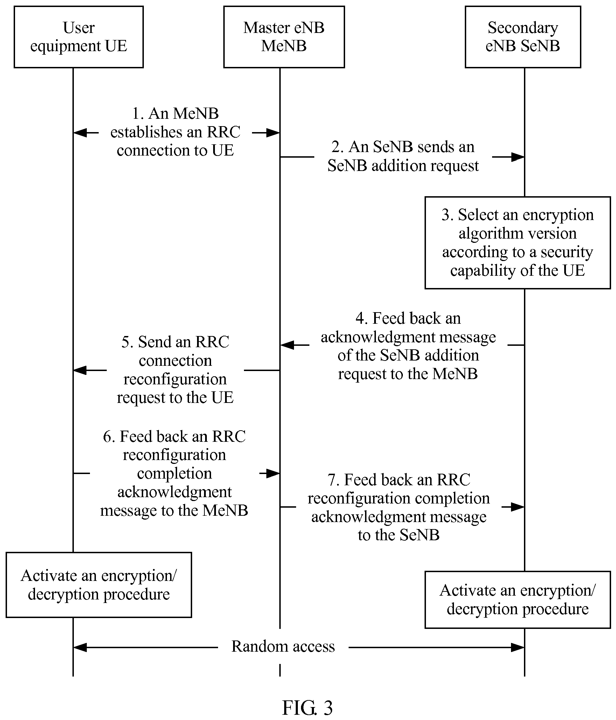

In a specific implementation, an embodiment of the present invention provides an SeNB key update system. The system may include UE, an MeNB, and an SeNB (which may specifically include an SeNB1 and an SeNB2). With reference to FIG. 3 to FIG. 12, the following specifically describes an SeNB key update method, apparatus and system provided in the embodiments of the present invention.

To better describe specific implementations of the embodiments of the present invention, with reference to FIG. 3, the following first describes in detail a procedure in which when UE is connected to a single SeNB and a single MeNB, the UE, the MeNB and the SeNB perform key encryption or decryption in the prior art.

Referring to FIG. 3, FIG. 3 is a schematic interaction diagram of key update in the prior art. FIG. 3 shows a key update procedure between one UE, one SeNB, and one MeNB, including the following steps:
1. The MeNB establishes an RRC connection to the UE.
2. The MeNB sends an SeNB addition request to the SeNB, and initiates a key update procedure to the SeNB by using the SeNB addition request. The SeNB addition request carries information such as a data stream encryption key S-KeNB, and a security capability of the UE in a cross-platform standard format.
3. The SeNB selects an encryption algorithm version according to the security capability of the UE.
4. The SeNB feeds back an acknowledgment message of the SeNB addition request to the MeNB.
5. The MeNB sends an RRC connection reconfiguration request to the UE, where the RRC connection reconfiguration request carries information such as a counting value of an SCG counter and an encryption algorithm version.
6. The UE feeds back an RRC connection reconfiguration completion acknowledgment message to the MeNB.
7. The MeNB sends the reconfiguration completion acknowledgment message to the SeNB to complete key update.

As shown in the foregoing steps, the MeNB first establishes the RRC connection to the UE, and the MeNB maintains a key M-KeNB and a counting value of an SCG counter, so as to use the counting value of the SCG counter and the key M-KeNB as input parameters to generate a new key S-KeNB. The MeNB sends the S-KeNB to the SeNB, and the SeNB uses the S-KeNB as an input parameter to generate a data stream encryption key Kupenc. When the S-KeNB needs to perform update, the MeNB increases the counting value of the SCG counter and separately sends an S-KeNB update procedure request to the UE and the SeNB. When the M-KeNB needs to perform update, an operation of the MeNB is to reset the counting value of the SCG counter to 0 and perform an S-KeNB update procedure.

In an interaction process of the foregoing key update, the prior art is intended only for a case in which the UE is connected to a single SeNB and a single MeNB. If the UE is simultaneously connected to N SeNBs, when n (n≤N) SeNBs request S-KeNB key update from the MeNB, the MeNB needs to send key update signaling (a specific presentation may be the RRC connection reconfiguration request in FIG. 3) to same UE n times according to the update procedure described in FIG. 3. The foregoing key update signaling is a message that needs to be sent to the UE by an eNB on the air interface. When a key on one SeNB is updated, key update signaling needs to be sent once. When the UE is simultaneously connected to N SeNBs, keys on the N SeNBs need to be updated. Therefore, the key update signaling needs to be sent to the same UE n times. An increase of N leads to higher air interface resource consumption, increasing control plane signaling interaction. Likewise, when the M-KeNB needs to perform update, the MeNB also needs to send the key update signaling to the UE n times, increasing times of the control plane signaling interaction.

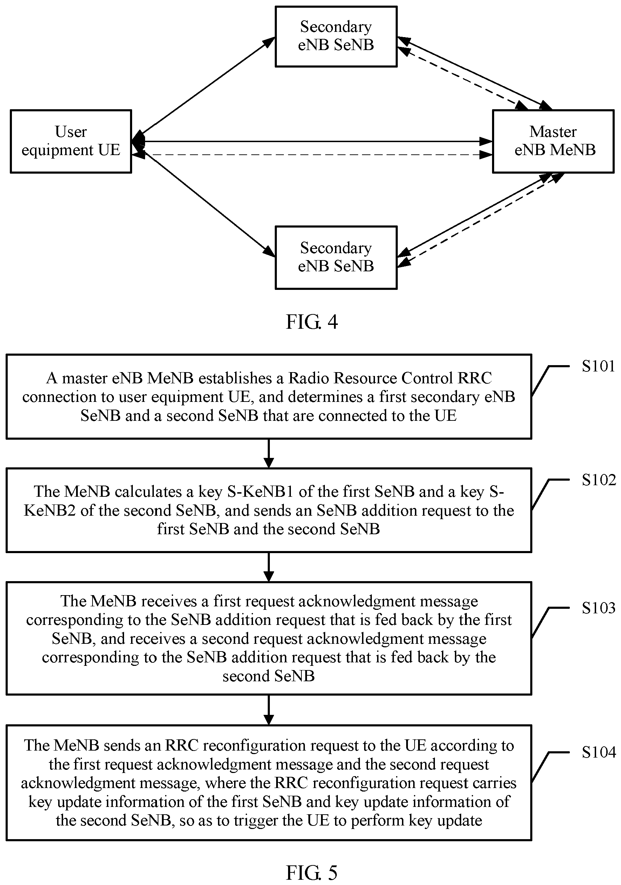

To correct a deficiency in the prior art such as high air interface resource consumption and multiple times of the control plane signaling interaction, this embodiment of the present invention provides a key update method. When multiple SeNBs concurrently request the key update, the SeNB addition request may be sent to the multiple SeNBs in same update processing, and then information fed back by the multiple SeNBs is added to one piece of key update signaling and is sent to the UE, so as to reduce the times of the control plane signaling interaction between the UE and the MeNB. In a specific implementation, this embodiment of the present invention may be applied to a multi-SeNB scenario. As shown in FIG. 4, the UE may be connected to the multiple SeNBs (this embodiment of the present invention uses two SeNBs as an example for specific description), a data bearer between the UE and the MeNB is distributed on the multiple SeNBs, and the MeNB may initiate a key update procedure for UE that needs to update a key and an SeNB associated with the UE. With reference to FIG. 5 to FIG. 9, the following specifically describes a key update method and apparatus provided in embodiments of the present invention.

Referring to FIG. 5, FIG. 5 is a schematic flowchart of an embodiment of a key update method according to an embodiment of the present invention. The key update method described in this embodiment of the present invention includes the following steps.

S101. A master eNB MeNB establishes a Radio Resource Control RRC connection to user equipment UE, and determines a first secondary eNB SeNB and a second SeNB that are connected to the UE.

In some feasible implementations, in dual connectivity, the MeNB described in this embodiment of the present invention may be configured to maintain a key M-KeNB and an SCG counter to ensure key uniqueness between the UE and each SeNB. In a specific implementation, when an SeNB key is updated, the MeNB may first establish the RRC connection to the UE, and further determine, according to a connection status between the UE and the SeNB, one or more SeNBs connected to the UE. Specifically, the UE may be connected to multiple SeNBs, and this embodiment of the present invention uses two SeNBs as an example for specific description. That is, after establishing the connection to the UE, the MeNB may determine a first SeNB and a second SeNB that are connected to the UE. The first SeNB and the second SeNB are merely examples, the first SeNB may be one of the multiple SeNBs connected to the UE, and the second SeNB may be any one or more of the multiple SeNBs connected to the UE other than the first SeNB. This is not limited herein.

S102. The MeNB calculates a key S-KeNB1 of the first SeNB and a key S-KeNB2 of the second SeNB, and sends an SeNB addition request to the first SeNB and the second SeNB.

In some feasible implementations, after determining the first SeNB (SeNB1 for short below) and the second SeNB (SeNB2 for short below), the MeNB may offload a data radio bearer (Data Radio Bearer, DRB) between the UE and the MeNB to the SeNB1 and the SeNB2. In a specific implementation, the MeNB may maintain one SCG counter and one M-KeNB key, and use a counting value of the SCG counter and the M-KeNB key as input parameters to calculate two S-KeNB keys, that is, the S-KeNB1 and the S-KeNB2. That the MeNB maintains one SCG counter may be as follows: The MeNB obtains one SCG counter and stores the SCG counter in specified storage space, and then sets an initial counting value of the SCG counter to 0. Each time the MeNB determines one S-KeNB, the counting value of the SCG counter increases by 1. In the specific implementation, the MeNB may use two different counting values of the SCG counter to respectively derive the key of the SeNB1 and the key of the SeNB2, that is, the S-KeNB 1 and the S-KeNB2. After calculating and obtaining the S-KeNB 1 and the S-KeNB2, the MeNB may send the S-KeNB 1 to the SeNB1 and send the S-KeNB2 to the SeNB2, so that the SeNB1 and the SeNB2 calculate a data stream encryption key.

In some feasible implementations, the MeNB may send a first SeNB addition request to the SeNB1, so as to initiate a key update procedure to the SeNB 1 by using the first SeNB addition request. Specifically, the MeNB may send, to the SeNB1, the first SeNB addition request that carries the S-KeNB1, and add a security capability of the UE to the first SeNB addition request. After determining the security capability of the UE, the SeNB1 may select a first encryption algorithm version supported by the UE (that is, an encryption algorithm that is appropriate for the SeNB1 to perform a key update operation), and calculate a data stream encryption key Kupenc1 according to the S-KeNB1. In a specific implementation, the MeNB may send the first SeNB addition request to the SeNB1, and may also send a second SeNB addition request to the SeNB2, so as to initiate a key update procedure to the SeNB2 by using the second SeNB addition request. Specifically, the MeNB may send, to the SeNB2, the second SeNB addition request that carries the S-KeNB2, and add the security capability of the UE to the second SeNB addition request. After determining the security capability of the UE, the SeNB2 may select a second encryption algorithm supported by the UE (that is, an encryption algorithm that is appropriate for the SeNB1 to perform a key update operation), and calculate a data stream encryption key Kupenc2 according to the S-KeNB2. That is, the MeNB may simultaneously send the SeNB addition request to the SeNB1 and the SeNB2, so as to trigger the SeNB1 and the SeNB2 to simultaneously perform key update, and improve key update efficiency and user experience. Specifically, the MeNB may send the S-KeNB1 to the SeNB1 and send the S-KeNB2 to the SeNB2 respectively at a same moment, or may send the S-KeNB1 to the SeNB1 and send the S-KeNB2 to the SeNB2 respectively within a preset time interval. A specific magnitude of the time interval is not limited herein. That is, the MeNB may calculate keys of the multiple SeNBs in one SeNB key update procedure, and further send a corresponding key to each SeNB, so as to trigger the multiple SeNBs to perform a related operation of the key update and save duration consumed by the multiple SeNBs for the key update operation.

S103. The MeNB receives a first request acknowledgment message corresponding to the SeNB addition request that is fed back by the first SeNB, and receives a second request acknowledgment message corresponding to the SeNB addition request that is fed back by the second SeNB.

S104. The MeNB sends an RRC reconfiguration request to the UE according to the first request acknowledgment message and the second request acknowledgment message, where the RRC reconfiguration request carries key update information of the first SeNB and key update information of the second SeNB, so as to trigger the UE to perform key update.

In some feasible implementations, after the MeNB sends the first SeNB addition request to the SeNB1, the SeNB1 may allocate an available air interface resource to key update this time, select an appropriate encryption algorithm (that is, first encryption algorithm version information), and further calculate a data stream encryption key Kupenc1 of the key update this time according to a first counting value of the SCG counter that is used to calculate the S-KeNB1. Specifically, the SeNB1 may configure a priority list of the encryption algorithms supported by the UE according to multiple encryption algorithms supported by the UE and with reference to a working status of the UE in a practical application scenario. After receiving the first SeNB addition request sent by the MeNB, the SeNB1 may further select an encryption algorithm with a highest priority from the foregoing priority list according to the foregoing priority list, and determine the algorithm with the highest priority as the foregoing appropriate encryption algorithm. Likewise, the SeNB2 may also allocate an available air interface resource to the key update this time, select an appropriate encryption algorithm (that is, second encryption algorithm version information), and further calculate a data stream encryption key Kupenc2 of the key update this time according to a second counting value of the SCG counter that is used to calculate the S-KeNB2. In a specific implementation, the SeNB1 and the SeNB2 may perform a same operation. The following uses an operation at an SeNB1 end as an example for brief description, and an operation at an SeNB2 end is not described again.

In some feasible implementations, after allocating the available air interface resource, selecting the corresponding encryption algorithm, and calculating and obtaining the encryption key Kupenc1 with reference to the first counting value, the SeNB1 may send the acknowledgment message of the SeNB addition request (that is, the first request acknowledgment message) to the MeNb, so as to feed back, to the MeNB, information such as the foregoing air interface resource, the first encryption algorithm version information, and the first counting value of the SCG counter and the M-KeNB that are used to calculate the S-KeNB1. The MeNB may receive the first request acknowledgment message that is fed back by the SeNB 1 and that is of the first SeNB addition request, and obtain the key update information of the SeNB 1 from the first request acknowledgment message. The key update information of the SeNB1 includes: a first air interface resource allocated by the first SeNB (that is, the SeNB1), the first encryption algorithm version information selected by the first SeNB, the first counting value of the SCG counter and the M-KeNB that are used to calculate the S-KeNB1, and the like. Further, the MeNB may receive the second request acknowledgment message that is fed back by the SeNB2 and that is of the second SeNB addition request, and obtain the key update information of the SeNB2 from the second request acknowledgment message. The key update information of the SeNB2 includes: a second air interface resource allocated by the second SeNB (that is, the SeNB2), the second encryption algorithm version information selected by the second SeNB, the second counting value of the SCG counter and the M-KeNB that are used to calculate the S-KeNB2, and the like.

In some feasible implementations, after obtaining the key update information of the SeNB 1 and the key update information of the SeNB2, the MeNB may add the key update information of the SeNB 1 and the key update information of the SeNB2 to the RRC reconfiguration request, and may further send the RRC reconfiguration request to the UE, so as to trigger the UE to perform the key update. The RRC reconfiguration request is used to trigger the UE to calculate the S-KeNB1 and the data stream encryption key Kupenc1 corresponding to the first SeNB, and the S-KeNB2 and the data stream encryption decryption key Kupenc2 corresponding to the second SeNB, so as to activate an encryption and decryption procedure. It should be noted that in this embodiment of the present invention, before sending the RRC reconfiguration request to the UE, the MeNB may collect key update information of all SeNBs connected to the UE (this embodiment of the present invention uses two SeNBs, the SeNB1 and the SeNB2, as an example for description), and may further add the key update information of all the SeNBs to one RRC reconfiguration request and send the RRC reconfiguration request to the UE, so as to trigger the UE to perform key update for all the SeNBs. That is, the MeNB needs to send key update signaling to the UE only once to complete the key update between the UE and all the SeNBs. This reduces times of signaling interaction between the MeNB and the UE, save the air interface resource, and save power consumption of the MeNB and the UE.

Further, in some feasible implementations, the MeNB sends the RRC reconfiguration request to the UE, and the RRC reconfiguration request carries the key update information of the SeNB1 and the key update information of the SeNB2. After receiving the RRC reconfiguration request, the UE may calculate the S-KeNB1 according to the first counting value of the SCG counter and the M-KeNB that are included in the key update information carried in the RRC reconfiguration request, and calculate the S-KeNB2 according to the second counting value of the SCG counter and the M-KeNB that are included in the key update information carried in the RRC reconfiguration request. The UE may further calculate the data stream encryption key Kupenc1 according to the S-KeNB1 and the corresponding encryption algorithm version information, and calculate the data stream encryption key Kupenc2 according to the S-KeNB2 and the corresponding encryption algorithm version information. Further, the UE may perform the key update for the SeNB1 according to the encryption key S-KeNB1 and the Kupenc1, perform the key update for the SeNB2 according to the encryption key S-KeNB2 and the Kupenc2, and may further feed back an RRC reconfiguration completion acknowledgment message to the MeNB.

In a specific implementation, the MeNB may receive the RRC reconfiguration completion acknowledgment message fed back by the UE, and may further separately send the RRC reconfiguration completion acknowledgment message to the SeNB1 and the SeNB2 by using an X2-C interface, so as to complete the key update.

In this embodiment of the present invention, in a key update process, the MeNB may first establish the RRC connection to the UE and determine a quantity of the SeNBs connected to the UE, and may further calculate, according to the quantity of the SeNBs, a corresponding key S-KeNB. Each SeNB corresponds to one key. After calculating and obtaining multiple keys, the MeNB may send the SeNB addition request to each SeNB, so as to send each key to a corresponding SeNB, and may further determine information such as an allocated air interface resource, a selected encryption algorithm, and a calculated and obtained encryption key Kupenc of each SeNB according to a request acknowledgment message fed back by each SeNB. Further, the MeNB may add, to one RRC reconfiguration request, the key update information fed back by all SeNBs, send the RRC reconfiguration request to the UE, and use one RRC reconfiguration request to trigger the UE to perform key update for all the SeNBs, so as to reduce times of control plane signaling interaction, reduce power consumption of the MeNB and the UE, improve key update efficiency, and enhance user experience of the key update.

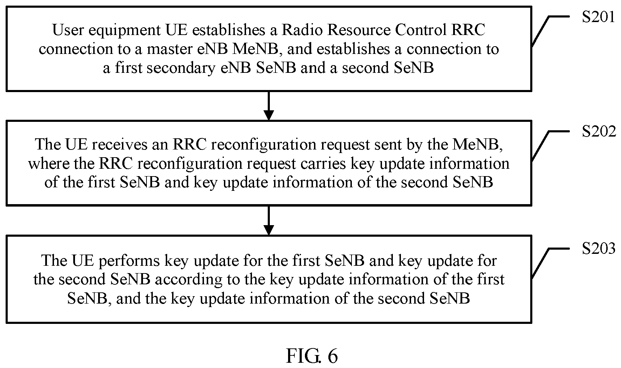

Referring to FIG. 6, FIG. 6 is a schematic flowchart of another embodiment of an SeNB key update method according to an embodiment of the present invention. The method described in this embodiment of the present invention includes the following steps:
S201. User equipment UE establishes a Radio Resource Control RRC connection to a master eNB MeNB, and establishes a connection to a first secondary eNB SeNB and a second SeNB.
S202. The UE receives an RRC reconfiguration request sent by the MeNB, where the RRC reconfiguration request carries key update information of the first SeNB and key update information of the second SeNB.
S203. The UE performs key update for the first SeNB and key update for the second SeNB according to the key update information of the first SeNB and the key update information of the second SeNB.

In some feasible implementations, the key update information of the first SeNB includes: a first air interface resource allocated by the first SeNB, first encryption algorithm version information selected by the first SeNB, and a first counting value of an SCG counter and the M-KeNB that are used to calculate the S-KeNB1; and
the key update information of the second SeNB includes: a second air interface resource allocated by the second SeNB, second encryption algorithm version information selected by the second SeNB, and a second counting value of the SCG counter and the M-KeNB that are used to calculate the S-KeNB2.

In some feasible implementations, the performing, by the UE, key update for the first SeNB and key update for the second SeNB according to the key update information of the first SeNB and the key update information of the second SeNB includes:
calculating, by the UE, the key S-KeNB 1 of the first SeNB according to the first counting value of the SCG counter and the M-KeNB that are carried in the key update information of the first SeNB;
calculating, by the UE, the key S-KeNB2 of the second SeNB according to the second counting value of the SCG counter and the M-KeNB that are carried in the key update information of the second SeNB;
calculating, by the UE, a data stream encryption key Kupenc1 corresponding to the first SeNB according to the first encryption algorithm version information and the S-KeNB 1 that are carried in the key update information of the first SeNB;
calculating, by the UE, a data stream encryption key Kupenc2 corresponding to the second SeNB according to the second encryption algorithm version information and the S-KeNB2 that are carried in the key update information of the second SeNB; and
performing, by the UE, the key update for the first SeNB according to the S-KeNB1 and the Kupenc1, and performing the key update for the second SeNB according to the S-KeNB2 and the Kupenc2.

In a specific implementation, the SeNB key update method described in this embodiment corresponding to FIG. 6 is executed by the UE described in this embodiment of the present invention. For a specific implementation process in which the UE interacts with the MeNB and the SeNB to perform the SeNB key update, refer to an implementation described in each step of an embodiment corresponding to FIG. 5, and details are not described herein again.

In this embodiment of the present invention, in a key update process, the UE may first establish the RRC connection to the MeNB and establish the connection to the SeNB, and may further receive the RRC reconfiguration request sent by the MeNB. The UE calculates keys of all SeNBs and data stream encryption keys corresponding to all the SeNBs according to key update information that is carried in the RRC reconfiguration request and that is of all the SeNBs, so as to trigger all the SeNBs to update the keys. This may reduce times of control plane signaling interaction between the UE and the MeNB, reduce power consumption of the MeNB and the UE, improve key update efficiency, and enhance user experience of the key update.

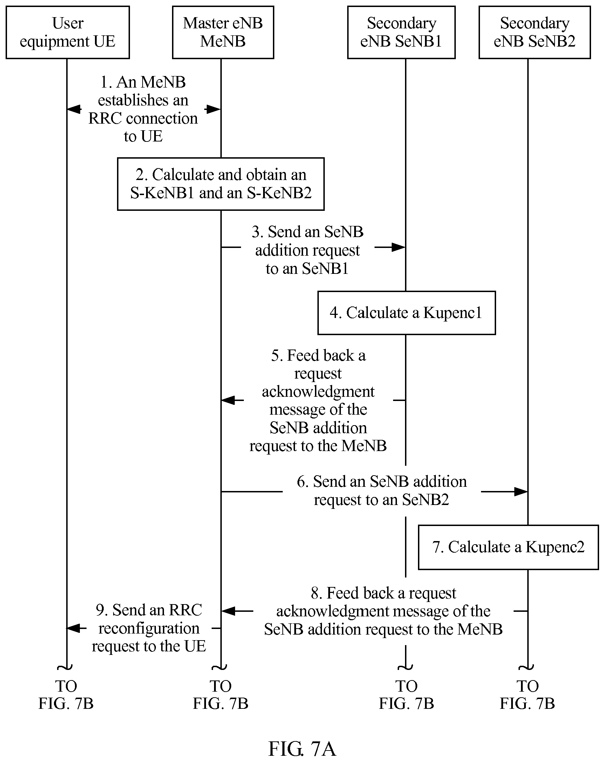

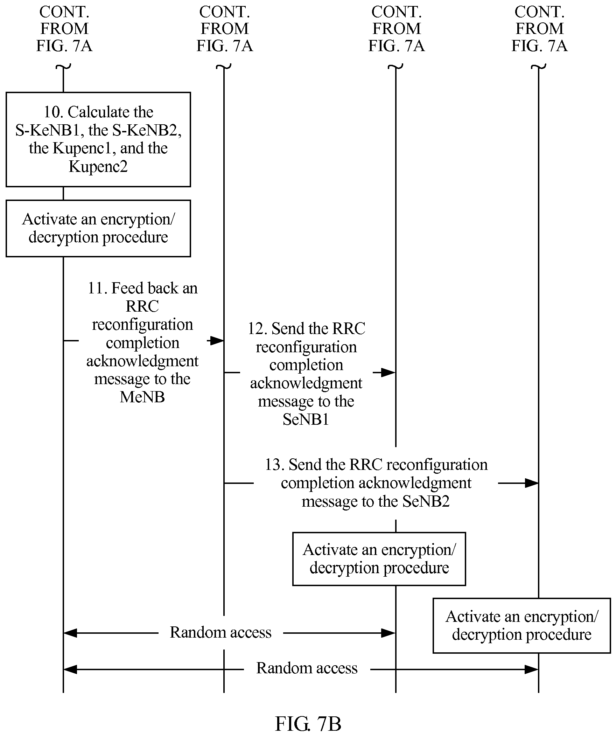

With reference to FIG. 7A and FIG. 7B, the following specifically describes an interaction process among an MeNB, UE, an SeNB1, and an SeNB2 in a key update method described in an embodiment of the present invention. The interaction process among the MeNB, the UE, the SeNB1, and the SeNB2 described in this embodiment of the present invention includes the following steps:
1. The MeNB establishes an RRC connection to the UE.
2. The MeNB determines to offload a DEB to the SeNB1 and the SeNB2. The MeNB maintains one SCG counter and one MeNB key M-KeNB, calculates an S-KeNB1 according to a first counting value of the SCG counter and the M-KeNB, and calculates an S-KeNB2 according to a second counting value of the SCG counter and the M-KeNB.
3. The MeNB sends an SeNB addition request to the SeNB1 by using an X2-C interface, and initiates a key update procedure to the SeNB 1 by using the SeNB addition request. The SeNB addition request carries a data stream encryption key S-KeNB1.
4. The SeNB1 allocates an available air interface resource to key update, and selects an appropriate encryption algorithm to calculate the encryption decryption key Kupenc1.
5. The SeNB1 feeds back a request acknowledgment message of the SeNB addition request to the MeNB, so as to indicate information such as the allocated air interface resource, the counting value of the SCG counter that is used to calculate the Kupenc1, and the encryption algorithm selected by the SeNB1.
6. The MeNB sends an SeNB addition request to the SeNB2 by using the X2-C interface, and initiates a key update procedure to the SeNB2 by using the SeNB addition request. The SeNB addition request carries a data stream encryption key S-KeNB2.
7. The SeNB2 allocates an available air interface resource to key update, and selects an appropriate encryption algorithm to calculate the encryption decryption key Kupenc2.
8. The SeNB2 feeds back a request acknowledgment message of the SeNB addition request to the MeNB, so as to indicate information such as the allocated air interface resource, the counting value of the SCG counter that is used to calculate the Kupenc2, and the encryption algorithm selected by the SeNB2.
9. The MeNB sends an RRC reconfiguration request to the UE, where the RRC reconfiguration request carries key update information of the SeNB1 and key update information of the SeNB2. For the key update information of the SeNB1 and the key update information of the SeNB2, refer to information described in a specific embodiment corresponding to FIG. 5, and details are not described herein again.
10. The UE calculates the S-KeNB1 key and the S-KeNB2 key for connection to the SeNB1 and the SeNB2 that are associated with the UE, and calculates the encryption decryption key Kupenc1 and the encryption decryption key Kupenc2, so as to activate an encryption and decryption procedure.
11. The UE feeds back an RRC reconfiguration completion acknowledgment message to the MeNB.
12. The MeNB sends the RRC reconfiguration completion acknowledgment message to the SeNB1 by using the X2-C interface, so as to trigger the SeNB1 to activate the encryption and decryption procedure.
13. The MeNB sends the RRC reconfiguration completion acknowledgment message to the SeNB1 by using the X2-C interface, so as to trigger the SeNB2 to activate the encryption and decryption procedure.

Further, a random access procedure may be started between the UE and the SeNB1 or the SeNB2.

In a specific implementation, for a specific implementation process of each step shown in the interaction procedure corresponding to FIG. 7A and FIG. 7B, refer to an implementation described in each step of an embodiment corresponding to FIG. 5, and details are not described herein again.

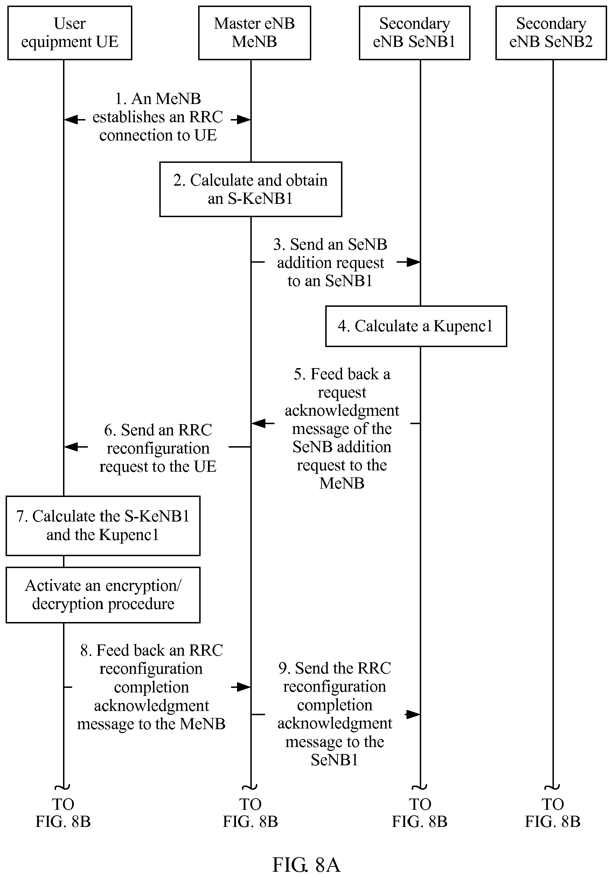

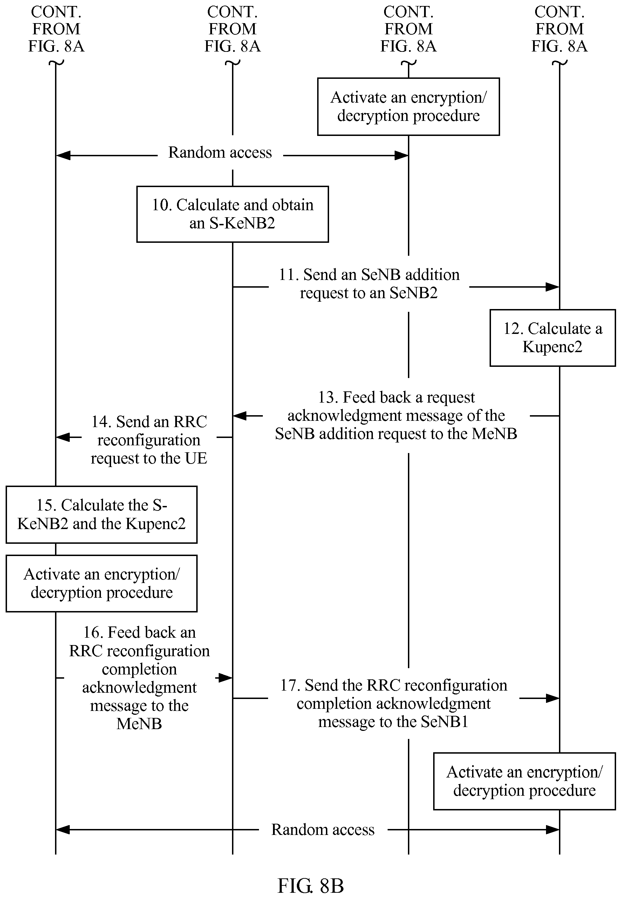

In a specific implementation, in a multi-SeNB scenario, in the key update method described in this embodiment of the present invention, the MeNB may also separately initiate a key update procedure to the SeNB1 and the SeNB2 twice. The following gives specific description with reference to FIG. 8A and FIG. 8B.

Referring to FIG. 8A and FIG. 8B, FIG. 8A and FIG. 8B are another interaction diagram of an MeNB, UE, an SeNB1 and an SeNB2 in a key update method according to an embodiment of the present invention, including the following steps:
1. The MeNB establishes an RRC connection to the UE.
2. The MeNB determines to offload a DRB to the SeNB1. The MeNB maintains one SCG counter and one MeNB key M-KeNB, and calculates an S-KeNB1 according to a first counting value of the SCG counter and the M-KeNB.
3. The MeNB sends an SeNB addition request to the SeNB1 by using an X2-C interface, and initiates a key update procedure to the SeNB 1 by using the SeNB addition request. The SeNB addition request carries a data stream encryption key S-KeNB1.
4. The SeNB1 allocates an available air interface resource to key update, and selects an appropriate encryption algorithm to calculate the encryption decryption key Kupenc1.
5. The SeNB1 feeds back a request acknowledgment message of the SeNB addition request to the MeNB, so as to indicate information such as the allocated air interface resource, the counting value of the SCG counter that is used to calculate the Kupenc1, and the encryption algorithm selected by the SeNB1.
6. The MeNB sends an RRC reconfiguration request to the UE, where the RRC connection reconfiguration request carries key update information of the SeNB 1. For the key update information of the SeNB1, refer to information described in a specific embodiment corresponding to FIG. 5, and details are not described herein again.
7. After receiving the RRC reconfiguration request sent by the MeNB, the UE calculates the S-KeNB1 key for the SeNB1 associated with the UE and calculates the encryption decryption key Kupenc1, so as to activate an encryption and decryption procedure.
8. The UE feeds back an RRC reconfiguration completion acknowledgment message to the MeNB.
9. The MeNB sends the RRC reconfiguration completion acknowledgment message to the SeNB1 by using the X2-C interface, so as to trigger the SeNB1 to activate the encryption and decryption procedure. After receiving the foregoing acknowledgment message, the SeNB1 may choose to activate the encryption and decryption procedure. After receiving a random access request message sent by the UE, the SeNB1 may further choose to start the encryption and decryption procedure.
10. The MeNB determines to offload the DRB to the SeNB2. The MeNB maintains the SCG counter and the MeNB key M-KeNB, and calculates an S-KeNB2 according to a second counting value of the SCG counter and the M-KeNB.
11. The MeNB sends an SeNB addition request to the SeNB2 by using the X2-C interface, and initiates a key update procedure to the SeNB2 by using the SeNB addition request. The SeNB addition request carries a data stream encryption key S-KeNB2.
12. The SeNB2 allocates an available air interface resource to key update, and selects an appropriate encryption algorithm to calculate the encryption decryption key Kupenc2.
13. The SeNB2 feeds back a request acknowledgment message of the SeNB addition request to the MeNB, so as to indicate information such as the allocated air interface resource, the counting value of the SCG counter that is used to calculate the Kupenc2, and the encryption algorithm selected by the SeNB2.
14. The MeNB sends an RRC reconfiguration request to the UE, where the RRC connection reconfiguration request carries key update information of the SeNB2. For the key update information of the SeNB2, refer to information described in the specific embodiment corresponding to FIG. 5, and details are not described herein again.
15. After receiving the RRC reconfiguration request sent by the MeNB, the UE calculates the S-KeNB2 key for the SeNB2 associated with the UE and calculates the encryption decryption key Kupenc2, so as to activate an encryption and decryption procedure.
16. The UE feeds back an RRC reconfiguration completion acknowledgment message to the MeNB.
17. The MeNB sends the RRC reconfiguration completion acknowledgment message to the SeNB2 by using the X2-C interface, so as to trigger the SeNB2 to activate the encryption and decryption procedure. After receiving the foregoing acknowledgment message, the SeNB2 may choose to activate the encryption and decryption procedure. After receiving a random access request message sent by the UE, the SeNB2 may further choose to start the encryption and decryption procedure.

In a specific implementation, the implementation shown in an interaction procedure corresponding to FIG. 8A and FIG. 8B is also applicable to a multi-SeNB scenario, and the MeNB may separately initiate a key update processing procedure to the SeNB1 and the SeNB2 twice. That is, the MeNB may not only simultaneously initiate the key update processing procedure to the SeNB1 and the SeNB2, but also separately initiate the key update processing procedure to the SeNB1 and the SeNB2 twice. A specific implementation may be determined according to an actual application scenario, and this is not limited herein. For a specific implementation process of each step shown in the foregoing interaction procedure, refer to an implementation described in each step of an embodiment corresponding to FIG. 5, and details are not described herein again.

In this embodiment of the present invention, in a key update process, the MeNB may first establish the RRC connection to the UE and determine a quantity of the SeNBs connected to the UE, and may further calculate, according to the quantity of the SeNBs, corresponding key S-KeNBs, including the S-KeNB1 and the S-KeNB2. After calculating and obtaining multiple keys, the MeNB may simultaneously send the SeNB addition request to each SeNB, so as to send each key to a corresponding SeNB, and may further determine information such as an allocated air interface resource, a selected encryption algorithm, and a calculated and obtained encryption key Kupenc of each SeNB according to a request acknowledgment message fed back by each SeNB. Further, the MeNB may send the RRC reconfiguration request to the UE according to the information fed back by each SeNB, and may further simultaneously send the reconfiguration acknowledgment message to each SeNB according to the RRC reconfiguration completion acknowledgment message fed back by the UE, so as to trigger each SeNB to activate the encryption and decryption procedure. This may reduce times of control plane signaling interaction and improve key update efficiency. Further, after calculating the corresponding key S-KeNBs according to the quantity of the SeNBs, the MeNB may separately send the SeNB addition request to each SeNB multiple times, so as to send each key to the corresponding SeNB, and may further determine the information such as the allocated air interface resource, the selected encryption algorithm and the calculated and obtained encryption key Kupenc of each SeNB according to the request acknowledgment message fed back by each SeNB. This increases an implementation of the key update and enhances user experience of the key update.

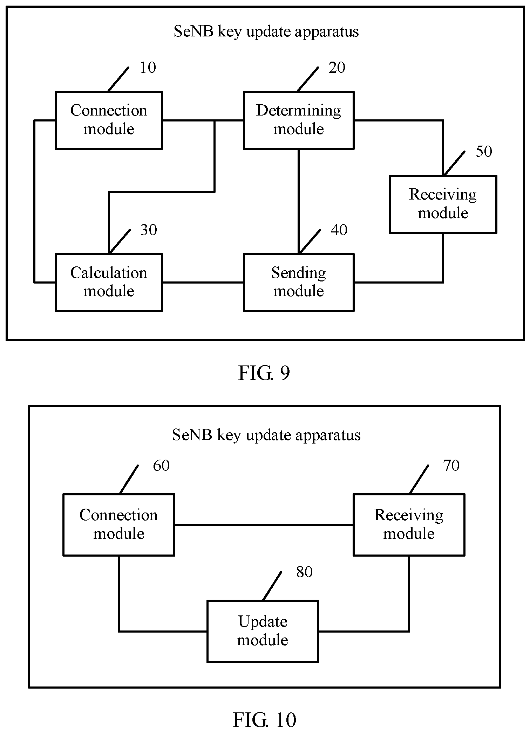

Referring to FIG. 9, FIG. 9 is a schematic structural diagram of an embodiment of an SeNB key update apparatus according to an embodiment of the present invention. The apparatus described in this embodiment of the present invention includes:
a connection module 10, configured to establish a Radio Resource Control RRC connection to user equipment UE;
a determining module 20, configured to determine a first secondary eNB SeNB and a second SeNB that are connected to the UE;
a calculation module 30, configured to calculate a key S-KeNB1 of the first SeNB determined by the determining module and a key S-KeNB2 of the second SeNB determined by the determining module;
a sending module 40, configured to send an SeNB addition request to the first SeNB and the second SeNB, where the addition request carries the S-KeNB1 or the S-KeNB2; and
a receiving module 50, configured to: receive a first request acknowledgment message corresponding to the SeNB addition request that is fed back by the first SeNB, and receive a second request acknowledgment message corresponding to the SeNB addition request that is fed back by the second SeNB; where
the sending module 40 is further configured to send an RRC reconfiguration request to the UE according to the first request acknowledgment message and the second request acknowledgment message, where the RRC reconfiguration request carries key update information of the first SeNB and key update information of the second SeNB, so as to trigger the UE to perform key update.

In some feasible implementations, the calculation module 30 is specifically configured to:
obtain a secondary cell group SCG counter and an MeNB key M-KeNB, and use a counting value of the SCG counter and the M-KeNB as input parameters, to calculate the key S-KeNB1 of the first SeNB and the key S-KeNB2 of the second SeNB.

The S-KeNB1 is used to generate a data stream encryption key Kupenc1 corresponding to the first SeNB, and the S-KeNB2 is used to generate a data stream encryption key Kupenc2 corresponding to the second SeNB.

In some feasible implementations, the calculation module 30 is specifically configured to:
obtain a first counting value of the SCG counter, and calculate the S-KeNB1 with reference to the M-KeNB; and
obtain a second counting value of the SCG counter, and calculate the S-KeNB2 with reference to the M-KeNB.

In some feasible implementations, the sending module 40 is specifically configured to:
send a first SeNB addition request to the first SeNB by using an X2-C interface, where the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, where the second SeNB addition request carries the security capability of the UE and the S-KeNB2, so as to trigger the second SeNB to calculate the data stream encryption decryption key Kupenc2 according to the security capability of the UE and the S-KeNB2.

In some feasible implementations, the sending module 40 is specifically configured to:
obtain the key update information of the first SeNB from the first request acknowledgment message, and obtain the key update information of the second SeNB from the second request acknowledgment message; and
add the key update information of the first SeNB and the key update information of the second SeNB to the RRC reconfiguration request, and send the RRC reconfiguration request to the UE.

The RRC reconfiguration request is used to trigger the UE to calculate the S-KeNB1 and the data stream encryption key Kupenc1 corresponding to the first SeNB, and the S-KeNB2 and the data stream encryption decryption key Kupenc2 corresponding to the second SeNB, so as to activate an encryption and decryption procedure.

In some feasible implementations, the key update information of the first SeNB includes: a first air interface resource allocated by the first SeNB, first encryption algorithm version information selected by the first SeNB, and the first counting value of the SCG counter and the M-KeNB that are used to calculate the S-KeNB1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

In a specific implementation, the SeNB key update apparatus described in this embodiment of the present invention may be specifically an MeNB provided in this embodiment of the present invention. The MeNB may perform an implementation described in each embodiment of an SeNB key update method provided in this embodiment of the present invention by using each built-in module of the MeNB, and details are not described herein again.

In this embodiment of the present invention, in a key update process, the MeNB may first establish the RRC connection to the UE and determine a quantity of the SeNBs connected to the UE, and may further calculate, according to the quantity of the SeNBs, a corresponding key S-KeNB. Each SeNB corresponds to one key. After calculating and obtaining multiple keys, the MeNB may send the SeNB addition request to each SeNB, so as to send each key to a corresponding SeNB, and may further determine information such as an allocated air interface resource, a selected encryption algorithm, and a calculated and obtained encryption key Kupenc of each SeNB according to a request acknowledgment message fed back by each SeNB. Further, the MeNB may add, to one RRC reconfiguration request, the key update information fed back by all SeNBs, send the RRC reconfiguration request to the UE, and use one RRC reconfiguration request to trigger the UE to perform key update for all the SeNBs, so as to reduce times of control plane signaling interaction, reduce power consumption of the MeNB and the UE, improve key update efficiency, and enhance user experience of the key update.

Referring to FIG. 10, FIG. 10 is a schematic structural diagram of another embodiment of an SeNB key update apparatus according to an embodiment of the present invention. The apparatus described in this embodiment of the present invention includes:
a connection module 60, configured to: establish a Radio Resource Control RRC connection to a master eNB MeNB, and establish a connection to a first secondary eNB SeNB and a second SeNB;
a receiving module 70, configured to receive an RRC reconfiguration request sent by the MeNB, where the RRC reconfiguration request carries key update information of the first SeNB and key update information of the second SeNB; and
an update module 80, configured to perform key update for the first SeNB and key update for the second SeNB according to the key update information of the first SeNB received by the receiving module, and the key update information of the second SeNB received by the receiving module.

In some feasible implementations, the key update information of the first SeNB includes: a first air interface resource allocated by the first SeNB, first encryption algorithm version information selected by the first SeNB, and a first counting value of an SCG counter and the M-KeNB that are used to calculate the S-KeNB1; and
the key update information of the second SeNB includes: a second air interface resource allocated by the second SeNB, second encryption algorithm version information selected by the second SeNB, and a second counting value of the SCG counter and the M-KeNB that are used to calculate the S-KeNB2.

In a specific implementation, the SeNB key update apparatus described in this embodiment of the present invention may be specifically UE provided in this embodiment of the present invention. The UE may perform an implementation described in each embodiment of an SeNB key update method provided in this embodiment of the present invention by using each built-in module of the UE, and details are not described herein again.

In this embodiment of the present invention, in a key update process, the UE may first establish the RRC connection to the MeNB and establish the connection to the SeNB, and may further receive the RRC reconfiguration request sent by the MeNB. The UE calculates keys of all SeNBs and data stream encryption keys corresponding to all the SeNBs according to key update information that is carried in the RRC reconfiguration request and that is of all the SeNBs, so as to trigger all the SeNBs to update the keys. This may reduce times of control plane signaling interaction between the UE and the MeNB, reduce power consumption of the MeNB and the UE, improve key update efficiency, and enhance user experience of the key update.

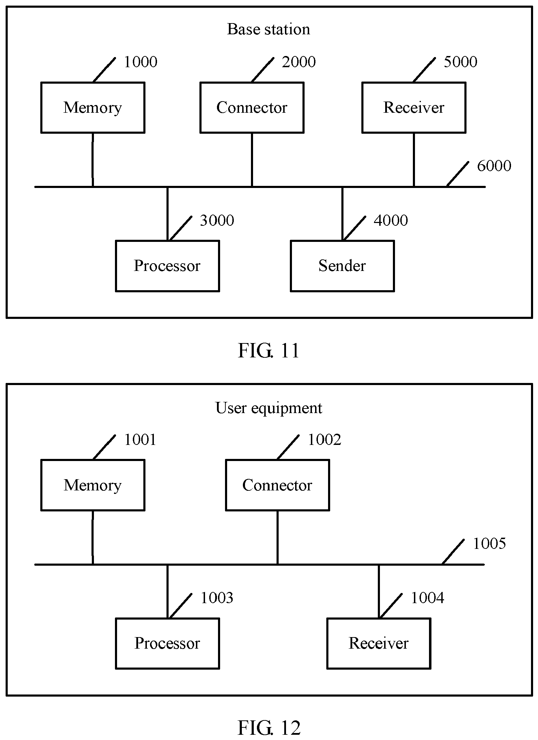

Referring to FIG. 11, FIG. 11 is a schematic structural diagram of an embodiment of a base station according to an embodiment of the present invention. The base station described in this embodiment of the present invention includes: a memory 1000, a connector 2000, a processor 3000, a sender 4000, and a receiver 5000, where the memory 1000, the connector 2000, the processor 3000, the sender 4000, and the receiver 5000 may be connected by using a bus 6000; the memory 1000 stores a set of program code; and
the sender 4000, the receiver 5000, and the processor 3000 are configured to invoke the program code stored in the memory 1000, to perform the following operations:

The connector 2000 is configured to establish a Radio Resource Control RRC connection to user equipment UE.

The processor 3000 is configured to determine a first secondary eNB SeNB and a second SeNB that are connected to the UE.

The processor 3000 is further configured to calculate a key S-KeNB1 of the first SeNB and a key S-KeNB2 of the second SeNB.

The sender 4000 is configured to send an SeNB addition request to the first SeNB and the second SeNB, where the addition request carries the S-KeNB1 or the S-KeNB2.

The receiver 5000 is configured to: receive a first request acknowledgment message corresponding to the SeNB addition request that is fed back by the first SeNB, and receive a second request acknowledgment message corresponding to the SeNB addition request that is fed back by the second SeNB.

The sender 4000 is further configured to send an RRC reconfiguration request to the UE according to the first request acknowledgment message and the second request acknowledgment message, where the RRC reconfiguration request carries key update information of the first SeNB and key update information of the second SeNB, so as to trigger the UE to perform key update.

In some feasible implementations, the processor 3000 is specifically configured to:
obtain a secondary cell group SCG counter and an MeNB key M-KeNB, and use a counting value of the SCG counter and the M-KeNB as input parameters, to calculate the key S-KeNB1 of the first SeNB and the key S-KeNB2 of the second SeNB.

The S-KeNB1 is used to generate a data stream encryption key Kupenc1 corresponding to the first SeNB, and the S-KeNB2 is used to generate a data stream encryption key Kupenc2 corresponding to the second SeNB.

In some feasible implementations, the processor 3000 is specifically configured to:
obtain a first counting value of the SCG counter, and calculate the S-KeNB1 with reference to the M-KeNB; and
obtain a second counting value of the SCG counter, and calculate the S-KeNB2 with reference to the M-KeNB.

In some feasible implementations, the sender 4000 is specifically configured to:
send a first SeNB addition request to the first SeNB by using an X2-C interface, where the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, where the second SeNB addition request carries the security capability of the UE and the S-KeNB2, so as to trigger the second SeNB to calculate the data stream encryption decryption key Kupenc2 according to the security capability of the UE and the S-KeNB2.

In some feasible implementations, the sender 4000 is specifically configured to:
obtain the key update information of the first SeNB from the first request acknowledgment message, and obtain the key update information of the second SeNB from the second request acknowledgment message; and
add the key update information of the first SeNB and the key update information of the second SeNB to the RRC reconfiguration request, and send the RRC reconfiguration request to the UE.

The RRC reconfiguration request is used to trigger the UE to calculate the S-KeNB1 and the data stream encryption key Kupenc1 corresponding to the first SeNB, and the S-KeNB2 and the data stream encryption decryption key Kupenc2 corresponding to the second SeNB, so as to activate an encryption and decryption procedure.

In some feasible implementations, the key update information of the first SeNB includes: a first air interface resource allocated by the first SeNB, first encryption algorithm version information selected by the first SeNB, and the first counting value of the SCG counter and the M-KeNB that are used to calculate the S-KeNB1; and
the key update information of the second SeNB includes: a second air interface resource allocated by the second SeNB, second encryption algorithm version information selected by the second SeNB, and the second counting value of the SCG counter and the M-KeNB that are used to calculate the S-KeNB2.

In a specific implementation, the base station described in this embodiment of the present invention may be specifically an MeNB provided in this embodiment of the present invention. The MeNB may perform an implementation described in each embodiment of an SeNB key update method provided in this embodiment of the present invention by using each built-in module of the MeNB, and details are not described herein again.

In this embodiment of the present invention, in a key update process, the MeNB may first establish the RRC connection to the UE and determine a quantity of the SeNBs connected to the UE, and may further calculate, according to the quantity of the SeNBs, a corresponding key S-KeNB. Each SeNB corresponds to one key. After calculating and obtaining multiple keys, the MeNB may send the SeNB addition request to each SeNB, so as to send each key to a corresponding SeNB, and may further determine information such as an allocated air interface resource, a selected encryption algorithm, and a calculated and obtained encryption key Kupenc of each SeNB according to a request acknowledgment message fed back by each SeNB. Further, the MeNB may add, to one RRC reconfiguration request, the key update information fed back by all SeNBs, send the RRC reconfiguration request to the UE, and use one RRC reconfiguration request to trigger the UE to perform key update for all the SeNBs, so as to reduce times of control plane signaling interaction, reduce power consumption of the MeNB and the UE, improve key update efficiency, and enhance user experience of the key update.

Referring to FIG. 12, FIG. 12 is a schematic structural diagram of an embodiment of user equipment according to an embodiment of the present invention. The base station described in this embodiment of the present invention includes: a memory 1001, a connector 1002, a processor 1003, and a receiver 1004, where the memory 1001, the connector 1002, the processor 1003, and the receiver 1004 may be connected by using a bus 1005; the memory stores a set of program code; and
the receiver 1004 and the processor 1003 are configured to invoke the program code stored in the memory 1001, to perform the following operations:

The connector 1002 is configured to: establish a Radio Resource Control RRC connection to a master eNB MeNB, and establish a connection to a first secondary eNB SeNB and a second SeNB.

The receiver 1004 is configured to receive an RRC reconfiguration request sent by the MeNB, where the RRC reconfiguration request carries key update information of the first SeNB and key update information of the second SeNB.

The processor 1003 is configured to perform key update for the first SeNB and key update for the second SeNB according to the key update information of the first SeNB, and the key update information of the second SeNB.

In some feasible implementations, the key update information of the first SeNB includes: a first air interface resource allocated by the first SeNB, first encryption algorithm version information selected by the first SeNB, and a first counting value of an SCG counter and the M-KeNB that are used to calculate the S-KeNB1; and
the key update information of the second SeNB includes: a second air interface resource allocated by the second SeNB, second encryption algorithm version information selected by the second SeNB, and a second counting value of the SCG counter and the M-KeNB that are used to calculate the S-KeNB2.

In some feasible implementations, the processor 1003 is specifically configured to:
calculate the key S-KeNB1 of the first SeNB according to the first counting value of the SCG counter and the M-KeNB that are carried in the key update information of the first SeNB;
calculate the key S-KeNB2 of the second SeNB according to the second counting value of the SCG counter and the M-KeNB that are carried in the key update information of the second SeNB;
calculate a data stream encryption key Kupenc1 corresponding to the first SeNB according to the first encryption algorithm version information and the S-KeNB1 that are carried in the key update information of the first SeNB;
calculate a data stream encryption key Kupenc2 corresponding to the second SeNB according to the second encryption algorithm version information and the S-KeNB2 that are carried in the key update information of the second SeNB; and
perform the key update for the first SeNB according to the S-KeNB1 and the Kupenc1, and perform the key update for the second SeNB according to the S-KeNB2 and the Kupenc2.

In this embodiment of the present invention, in a key update process, the UE may first establish the RRC connection to the MeNB and establish the connection to the SeNB, and may further receive the RRC reconfiguration request sent by the MeNB. The UE calculates keys of all SeNBs and data stream encryption keys corresponding to all the SeNBs according to key update information that is carried in the RRC reconfiguration request and that is of all the SeNBs, so as to trigger all the SeNBs to update the keys. This may reduce times of control plane signaling interaction between the UE and the MeNB, reduce power consumption of the MeNB and the UE, improve key update efficiency, and enhance user experience of the key update.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

What is disclosed above is merely example embodiments of the present invention, and certainly is not intended to limit the protection scope of the present invention. Therefore, equivalent variations made in accordance with the claims of the present invention shall fall within the scope of the present invention.

## Claims

1. An SeNB key update method, comprising:
establishing (101), by a master Enb, MeNB, a Radio Resource Control, RRC, connection to user equipment UE, and determining a first secondary eNB SeNB and a second SeNB that are connected to the UE;
calculating (102), by the MeNB, a key S-KeNB1 of the first SeNB and a key S-KeNB2 of the second SeNB, and sending an SeNB addition request to the first SeNB and the second SeNB, wherein the addition request to the first SeNB carries the S-KeNB1 and the addition request to the second SeNB carries the S-KeNB2;
receiving (103), by the MeNB, a first request acknowledgment message corresponding to the SeNB addition request that is fed back by the first SeNB, and receiving a second request acknowledgment message corresponding to the SeNB addition request that is fed back by the second SeNB; and
sending (104), by the MeNB, an RRC reconfiguration request to the UE according to the first request acknowledgment message and the second request acknowledgment message, wherein the RRC reconfiguration request carries key update information of the first SeNB and key update information of the second SeNB, so as to trigger the UE to perform key update; wherein the sending, by the MeNB, an RRC reconfiguration request to the UE according to the first request acknowledgment message and the second request acknowledgment message comprises:
obtaining, by the MeNB, the key update information of the first SeNB from the first request acknowledgment message, and obtaining the key update information of the second SeNB from the second request acknowledgment message; and
adding, by the MeNB, the key update information of the first SeNB and the key update information of the second SeNB to the RRC reconfiguration request, and sending the RRC reconfiguration request to the UE, wherein
the RRC reconfiguration request is used to trigger the UE to calculate the S-KeNB1 and a data stream encryption decryption key Kupenc1 corresponding to the first SeNB, and the S-KeNB2 and a data stream encryption decryption key Kupenc2 corresponding to the second SeNB, so as to activate an encryption and decryption procedure.

2. The method according to claim 1, wherein the calculating, by the MeNB, a key S-KeNB1 of the first SeNB and a key S-KeNB2 of the second SeNB comprises:
obtaining, by the MeNB, a secondary cell group, SCG, counter and an MeNB key M-KeNB, and using a counting value of the SCG counter and the M-KeNB as input parameters, to calculate the key S-KeNB1 of the first SeNB and the key S-KeNB2 of the second SeNB, wherein
the S-KeNB1 is used to generate a data stream encryption key Kupenc1 corresponding to the first SeNB, and the S-KeNB2 is used to generate a data stream encryption key Kupenc2 corresponding to the second SeNB.

3. The method according to claim 2, wherein the using a counting value of the SCG counter and the M-KeNB as input parameters, to calculate the key S-KeNB1 of the first SeNB and the key S-KeNB2 of the second SeNB comprises:
obtaining a first counting value of the SCG counter, and calculating the S-KeNB1 with reference to the M-KeNB; and
obtaining a second counting value of the SCG counter, and calculating the S-KeNB2 with reference to the M-KeNB.

4. The method according to any one of claims 1 to 3, wherein the sending an SeNB addition request to the first SeNB and the second SeNB comprises:
sending, by the MeNB, a first SeNB addition request to the first SeNB by using an X2-C interface, wherein the first SeNB addition request carries a security capability of the UE and the S-KeNB1, so as to trigger the first SeNB to calculate the data stream encryption decryption key Kupenc1 according to the security capability of the UE and the S-KeNB1; and
sending, by the MeNB, a second SeNB addition request to the second SeNB by using the X2-C interface, wherein the second SeNB addition request carries the security capability of the UE and the S-KeNB2, so as to trigger the second SeNB to calculate the data stream encryption decryption key Kupenc2 according to the security capability of the UE and the S-KeNB2.

5. The method according to any one of claims 1 to 4, wherein the key update information of the first SeNB comprises: a first air interface resource allocated by the first SeNB, first encryption algorithm version information selected by the first SeNB, and the first counting value of the SCG counter and the M-KeNB that are used to calculate the S-KeNB1; and
the key update information of the second SeNB comprises: a second air interface resource allocated by the second SeNB, second encryption algorithm version information selected by the second SeNB, and the second counting value of the SCG counter and the M-KeNB that are used to calculate the S-KeNB2.

6. An SeNB key update apparatus, comprising:
a connection module (10), configured to establish a Radio Resource Control, RRC, connection to user equipment UE;
a determining module (20), configured to determine a first secondary eNB SeNB and a second SeNB that are connected to the UE;
a calculation module (30), configured to calculate a key S-KeNB1 of the first SeNB determined by the determining module and a key S-KeNB2 of the second SeNB determined by the determining module;
a sending module (40), configured to send an SeNB addition request to the first SeNB and the second SeNB, wherein the addition request to the first SeNB carries the S-KeNB1 and the addition request to the second SeNB carries the S-KeNB2; and
a receiving module (50), configured to: receive a first request acknowledgment message corresponding to the SeNB addition request that is fed back by the first SeNB, and receive a second request acknowledgment message corresponding to the SeNB addition request that is fed back by the second SeNB; wherein
the sending module (40) is further configured to send an RRC reconfiguration request to the UE according to the first request acknowledgment message and the second request acknowledgment message, wherein the RRC reconfiguration request carries key update information of the first SeNB and key update information of the second SeNB, so as to trigger the UE to perform key update; wherein the sending module (40) is specifically configured to:
obtain the key update information of the first SeNB from the first request acknowledgment message, and obtain the key update information of the second SeNB from the second request acknowledgment message; and
add the key update information of the first SeNB and the key update information of the second SeNB to the RRC reconfiguration request, and send the RRC reconfiguration request to the UE, wherein
the RRC reconfiguration request is used to trigger the UE to calculate the S-KeNB1 and a data stream encryption decryption key Kupenc1 corresponding to the first SeNB, and the S-KeNB2 and a data stream encryption decryption key Kupenc2 corresponding to the second SeNB, so as to activate an encryption and decryption procedure.

7. The apparatus according to claim 6, wherein the calculation module (30) is specifically configured to:
obtain a secondary cell group, SCG, counter and an MeNB key M-KeNB, and use a counting value of the SCG counter and the M-KeNB as input parameters, to calculate the key S-KeNB1 of the first SeNB and the key S-KeNB2 of the second SeNB, wherein
the S-KeNB1 is used to generate a data stream encryption key Kupenc1 corresponding to the first SeNB, and the S-KeNB2 is used to generate a data stream encryption key Kupenc2 corresponding to the second SeNB.

8. The apparatus according to claim 7, wherein the calculation module (30) is specifically configured to:
obtain a first counting value of the SCG counter, and calculate the S-KeNB1 with reference to the M-KeNB; and
obtain a second counting value of the SCG counter, and calculate the S-KeNB2 with reference to the M-KeNB.

9. The apparatus according to any one of claims 6 to 8, wherein the sending module (40) is specifically configured to:
send a first SeNB addition request to the first SeNB by using an X2-C interface, wherein the first SeNB addition request carries a security capability of the UE and the S-KeNB1, so as to trigger the first SeNB to calculate the data stream encryption decryption key Kupenc1 according to the security capability of the UE and the S-KeNB1; and
send a second SeNB addition request to the second SeNB by using the X2-C interface, wherein the second SeNB addition request carries the security capability of the UE and the S-KeNB2, so as to trigger the second SeNB to calculate the data stream encryption decryption key Kupenc2 according to the security capability of the UE and the S-KeNB2.

10. The apparatus according to claim 9, wherein the key update information of the first SeNB comprises: a first air interface resource allocated by the first SeNB, first encryption algorithm version information selected by the first SeNB, and the first counting value of the SCG counter and the M-KeNB that are used to calculate the S-KeNB1; and
the key update information of the second SeNB comprises: a second air interface resource allocated by the second SeNB, second encryption algorithm version information selected by the second SeNB, and the second counting value of the SCG counter and the M-KeNB that are used to calculate the S-KeNB2.

11. An SeNB key update apparatus, comprising:
a connection module (60), configured to: establish a Radio Resource Control RRC connection to a master eNB MeNB, and establish a simultaneous connection to a first secondary eNB SeNB and a second SeNB;
a receiving module (70), configured to receive an RRC reconfiguration request sent by the MeNB according to a first request acknowledge message fed back by the first SeNB and a second request acknowledge message fed back by the second SeNB, wherein the RRC reconfiguration request carries key update information of the first SeNB being obtained from the first request acknowledgement message and key update information of the second SeNB being obtained from the second request acknowledgement message; and
an update module (80), configured to perform key update for the first SeNB by calculating a key S-KeNB1 according to the key update information of the first SeNB received by the receiving module (70) and a data stream encryption decryption key Kupenc1 corresponding to the first SeNB, and to perform a key update for the second SeNB by calculating a key S-KeNB2 according to the key update information of the second SeNB received by the receiving module (70) and a data stream encryption decryption key Kupenc2 corresponding to the second SeNB.

12. The apparatus according to claim 11, wherein the key update information of the first SeNB comprises: a first air interface resource allocated by the first SeNB, first encryption algorithm version information selected by the first SeNB, and a first counting value of an SCG counter and the M-KeNB that are used to calculate the S-KeNB1; and
the key update information of the second SeNB comprises: a second air interface resource allocated by the second SeNB, second encryption algorithm version information selected by the second SeNB, and a second counting value of the SCG counter and the M-KeNB that are used to calculate the S-KeNB2.

13. The apparatus according to claim 12, wherein the update module (80) is specifically configured to:
calculate the key S-KeNB1 of the first SeNB according to the first counting value of the SCG counter and the M-KeNB that are carried in the key update information of the first SeNB;
calculate the key S-KeNB2 of the second SeNB according to the second counting value of the SCG counter and the M-KeNB that are carried in the key update information of the second SeNB;
calculate the data stream encryption key Kupenc1 corresponding to the first SeNB according to the first encryption algorithm version information and the S-KeNB1 that are carried in the key update information of the first SeNB;
calculate the data stream encryption key Kupenc2 corresponding to the second SeNB according to the second encryption algorithm version information and the S-KeNB2 that are carried in the key update information of the second SeNB; and
perform the key update for the first SeNB according to the S-KeNB1 and the Kupenc1, and perform the key update for the second SeNB according to the S-KeNB2 and the Kupenc2.

## Patentansprüche

1. SeNB-Schlüsselaktualisierungsverfahren, das Folgendes umfasst:
Herstellen (101), durch einen Master-eNB, MeNB, einer Funkressourcensteuerung-Verbindung bzw. RRC-Verbindung mit einem Benutzergerät, UE, und Bestimmen eines ersten Sekundär-eNB, SeNB, und eines zweiten SeNB, die mit dem UE verbunden sind;
Berechnen (102), durch den MeNB, eines Schlüssels S-KeNB1 des ersten SeNB und eines Schlüssels S-KeNB2 des zweiten SeNB und Senden einer SeNB-Hinzufügeanforderung an den ersten SeNB und den zweiten SeNB, wobei die Hinzufügeanforderung zum ersten SeNB den S-KeNB1 führt und die Hinzufügeanforderung zum zweiten SeNB den S-KeNB2 führt;
Empfangen (103), durch den MeNB, einer ersten Anforderungsbestätigungsnachricht, die der SeNB-Hinzufügeanforderung entspricht, die durch den ersten SeNB zurückgemeldet wird, und Empfangen einer zweiten Anforderungsbestätigungsnachricht, die der SeNB-Hinzufügeanforderung entspricht, die durch den zweiten SeNB zurückgemeldet wird; und
Senden (104), durch den MeNB, einer RRC-Neukonfigurationsanforderung an das UE gemäß der ersten Anforderungsbestätigungsnachricht und der zweiten Anforderungsbestätigungsnachricht, wobei die RRC-Neukonfigurationsanforderung Schlüsselaktualisierungsinformationen des ersten SeNB führt und Schlüsselaktualisierungsinformationen des zweiten SeNB führt, um somit das UE zu triggern, eine Schlüsselaktualisierung durchzuführen; wobei das Senden, durch den MeNB, einer RRC-Neukonfigurationsanforderung an das UE gemäß der ersten Anforderungsbestätigungsnachricht und der zweiten Anforderungsbestätigungsnachricht Folgendes umfasst:
Erhalten, durch den MeNB, der Schlüsselaktualisierungsinformationen des ersten SeNB aus der ersten Anforderungsbestätigungsnachricht und Erhalten der Schlüsselaktualisierungsinformationen des zweiten SeNB aus der zweiten Anforderungsbestätigungsnachricht; und
Hinzufügen, durch den MeNB, der Schlüsselaktualisierungsinformationen des ersten SeNB und der Schlüsselaktualisierungsinformationen des zweiten SeNB zu der RRC-Neukonfigurationsanforderung und Senden der RRC-Neukonfigurationsanforderung an das UE, wobei
die RRC-Neukonfigurationsanforderung verwendet wird zum Triggern des UE zum Berechnen des S-KeNB1 und eines Datenstrom-Verschlüsselungs-Entschlüsselungs-Schlüssels Kupenc1, der dem ersten SeNB entspricht, und des S-KeNB2 und eines Datenstrom-Verschlüsselungs-Entschlüsselungs-Schlüssel Kupenc2, der dem zweiten SeNB entspricht, um somit eine Verschlüsselungs- und Entschlüsselungs-Prozedur zu aktivieren.

2. Verfahren nach Anspruch 1, wobei das Berechnen, durch den MeNB, eines Schlüssels S-KeNB1 des ersten SeNB und eines Schlüssels S-KeNB2 des zweiten SeNB Folgendes umfasst:
Erhalten, durch den MeNB, eines Sekundärzellengruppenzählers bzw. SCG-Zählers und eines MeNB-Schlüssels M-KeNB und Verwenden eines Zählwerts des SCG-Zählers und des M-KeNB als Eingangsparameter zum Berechnen des Schlüssels S-KeNB1 des ersten SeNB und des Schlüssels S-KeNB2 des zweiten SeNB, wobei der S-KeNB 1 verwendet wird zum Erzeugen eines Datenstromverschlüsselungsschlüssels Kupenc1, der dem ersten SeNB entspricht, und der S-KeNB2 verwendet wird zum Erzeugen eines Datenstromverschlüsselungsschlüssels Kupenc2, der dem zweiten SeNB entspricht.

3. Verfahren nach Anspruch 2, wobei das Verwenden eines Zählwerts des SCG-Zählers und des M-KeNB als Eingangsparameter zum Berechnen des Schlüssels S-KeNB1 des ersten SeNB und des Schlüssels S-KeNB2 des zweiten SeNB Folgendes umfasst:
Erhalten eines ersten Zählwerts des SCG-Zählers und Berechnen des S-KeNB1 mit Bezug auf den M-KeNB; und
Erhalten eines zweiten Zählwerts des SCG-Zählers und Berechnen des S-KeNB2 mit Bezug auf den M-KeNB.

4. Verfahren nach einem der Ansprüche 1 bis 3, wobei das Senden einer SeNB-Hinzufügeanforderung an den ersten SeNB und den zweiten SeNB Folgendes umfasst:
Senden, durch den MeNB, einer ersten SeNB-Hinzufügeanforderung an den ersten SeNB unter Verwendung einer X2-C-Schnittstelle, wobei die erste SeNB-Hinzufügeanforderung eine Sicherheitsfähigkeit des UE und des S-KeNB1 führt, um somit den ersten SeNB zu triggern zum Berechnen des Datenstrom-Verschlüsselungs-Entschlüsselungs-Schlüssels Kupenc1 gemäß den Sicherheitsfähigkeiten des UE und des S-KeNB 1;
Senden, durch den MeNB, einer zweiten SeNB-Hinzufügeanforderung an den zweiten SeNB unter Verwendung der X2-C-Schnittstelle, wobei die zweite SeNB-Hinzufügeanforderung die Sicherheitsfähigkeit des UE und des S-KeNB2 führt, um somit den zweiten SeNB zu triggern zum Berechnen des Datenstrom-Verschlüsselungs-Entschlüsselungs-Schlüssels Kupenc2 gemäß den Sicherheitsfähigkeiten des UE und des S-KeNB2.

5. Verfahren nach einem der Ansprüche 1 bis 4, wobei die Schlüsselaktualisierungsinformationen des ersten SeNB Folgendes umfassen: eine durch den ersten SeNB zugewiesene erste Luftschnittstellenressource, durch den ersten SeNB ausgewählte erste Verschlüsselungsalgorithmusversionsinformationen und den ersten Zählwert des SCG-Zählers und den M-KeNB, die zum Berechnen des S-KeNB 1 verwendet werden; und
die Schlüsselaktualisierungsinformationen des zweiten SeNB Folgendes umfassen:
eine durch den zweiten SeNB zugewiesene zweite Luftschnittstellenressource, durch den zweiten SeNB ausgewählte zweite Verschlüsselungsalgorithmusversionsinformationen und den zweiten Zählwert des SCG-Zählers und den M-KeNB, die zum Berechnen des S-KeNB2 verwendet werden.

6. SeNB-Schlüsselaktualisierungseinrichtung, die Folgendes umfasst:
ein Verbindungsmodul (10), ausgelegt zum Herstellen einer Funkressourcensteuerung-Verbindung bzw. RRC-Verbindung mit einem Benutzergerät, UE;
ein Bestimmungsmodul (20), ausgelegt zum Bestimmen eines ersten Sekundär-eNB, SeNB, und eines zweiten SeNB, die mit dem UE verbunden sind;
ein Berechnungsmodul (30), ausgelegt zum Berechnen eines Schlüssels S-KeNB1 des ersten SeNB, bestimmt durch das Bestimmungsmodul, und eines Schlüssels S-KeNB2 des zweiten SeNB, bestimmt durch das Bestimmungsmodul;
ein Sendemodul (40), ausgelegt zum Senden einer SeNB-Hinzufügeanforderung an den ersten SeNB und den zweiten SeNB, wobei die Hinzufügeanforderung zum ersten SeNB den S-KeNB1 führt und die Hinzufügeanforderung zum zweiten SeNB den S-KeNB2 führt; und
ein Empfangsmodul (50), ausgelegt zum: Empfangen einer ersten Anforderungsbestätigungsnachricht, die der SeNB-Hinzufügeanforderung entspricht, die durch den ersten SeNB zurückgemeldet wird, und Empfangen einer zweiten Anforderungsbestätigungsnachricht, die der SeNB-Hinzufügeanforderung entspricht, die durch den zweiten SeNB zurückgemeldet wird; wobei
das Sendemodul (40) ferner ausgelegt ist zum Senden einer RRC-Neukonfigurationsanforderung an das UE gemäß der ersten Anforderungsbestätigungsnachricht und der zweiten Anforderungsbestätigungsnachricht, wobei die RRC-Neukonfigurationsanforderung Schlüsselaktualisierungsinformationen des ersten SeNB und Schlüsselaktualisierungsinformationen des zweiten SeNB führt, um somit das UE zu triggern, eine Schlüsselaktualisierung durchzuführen; wobei das Sendemodul (40) insbesondere ausgelegt ist zum:
Erhalten der Schlüsselaktualisierungsinformationen des ersten SeNB aus der ersten Anforderungsbestätigungsnachricht und Erhalten der Schlüsselaktualisierungsinformationen des zweiten SeNB aus der zweiten Anforderungsbestätigungsnachricht; und
Hinzufügen der Schlüsselaktualisierungsinformationen des ersten SeNB und der Schlüsselaktualisierungsinformationen des zweiten SeNB zu der RRC-Neukonfigurationsanforderung und Senden der RRC-Neukonfigurationsanforderung an das UE, wobei
die RRC-Neukonfigurationsanforderung verwendet wird zum Triggern des UE zum Berechnen des S-KeNB1 und eines Datenstrom-Verschlüsselungs-Entschlüsselungs-Schlüssels Kupenc1, der dem ersten SeNB entspricht, und des S-KeNB2 und eines Datenstrom-Verschlüsselungs-Entschlüsselungs-Schlüssel Kupenc2, der dem zweiten SeNB entspricht, um somit eine Verschlüsselungs- und Entschlüsselungs-Prozedur zu aktivieren.

7. Einrichtung nach Anspruch 6, wobei das Berechnungsmodul (30) insbesondere ausgelegt ist zum:
Erhalten eines Sekundärzellengruppenzählers bzw. SCG-Zählers und eines MeNB-Schlüssels M-KeNB und Verwenden eines Zählwerts des SCG-Zählers und des M-KeNB als Eingangsparameter zum Berechnen des Schlüssels S-KeNB1 des ersten SeNB und des Schlüssels S-KeNB2 des zweiten SeNB, wobei der S-KeNB 1 verwendet wird zum Erzeugen eines Datenstromverschlüsselungsschlüssels Kupenc1, der dem ersten SeNB entspricht, und der S-KeNB2 verwendet wird zum Erzeugen eines Datenstromverschlüsselungsschlüssels Kupenc2, der dem zweiten SeNB entspricht.

8. Einrichtung nach Anspruch 7, wobei das Berechnungsmodul (30) insbesondere ausgelegt ist zum:
Erhalten eines ersten Zählwerts des SCG-Zählers und Berechnen des S-KeNB1 mit Bezug auf den M-KeNB; und
Erhalten eines zweiten Zählwerts des SCG-Zählers und Berechnen des S-KeNB2 mit Bezug auf den M-KeNB.

9. Einrichtung nach einem der Ansprüche 6 bis 8, wobei das Sendemodul (40) insbesondere ausgelegt ist zum:
Senden einer ersten SeNB-Hinzufügeanforderung an den ersten SeNB unter Verwendung einer X2-C-Schnittstelle, wobei die erste SeNB-Hinzufügeanforderung eine Sicherheitsfähigkeit des UE und des S-KeNB 1 führt, um somit den ersten SeNB zu triggern zum Berechnen des Datenstrom-Verschlüsselungs-Entschlüsselungs-Schlüssels Kupenc1 gemäß den Sicherheitsfähigkeiten des UE und des S-KeNB1;
Senden einer zweiten SeNB-Hinzufügeanforderung an den zweiten SeNB unter Verwendung der X2-C-Schnittstelle, wobei die zweite SeNB-Hinzufügeanforderung die Sicherheitsfähigkeit des UE und des S-KeNB2 führt, um somit den zweiten SeNB zu triggern zum Berechnen des Datenstrom-Verschlüsselungs-Entschlüsselungs-Schlüssels Kupenc2 gemäß den Sicherheitsfähigkeiten des UE und des S-KeNB2.

10. Einrichtung nach Anspruch 9, wobei die Schlüsselaktualisierungsinformationen des ersten SeNB Folgendes umfassen: eine durch den ersten SeNB zugewiesene erste Luftschnittstellenressource, durch den ersten SeNB ausgewählte erste Verschlüsselungsalgorithmusversionsinformationen und den ersten Zählwert des SCG-Zählers und den M-KeNB, die zum Berechnen des S-KeNB1 verwendet werden; und
die Schlüsselaktualisierungsinformationen des zweiten SeNB Folgendes umfassen:
eine durch den zweiten SeNB zugewiesene zweite Luftschnittstellenressource, durch den zweiten SeNB ausgewählte zweite Verschlüsselungsalgorithmusversionsinformationen und den zweiten Zählwert des SCG-Zählers und den M-KeNB, die zum Berechnen des S-KeNB2 verwendet werden.

11. SeNB-Schlüsselaktualisierungseinrichtung, die Folgendes umfasst:
ein Verbindungsmodul (60), ausgelegt zum: Herstellen einer Funkressourcensteuerung-Verbindung bzw. RRC-Verbindung mit einem MastereNB, M-eNB, und Herstellen einer gleichzeitigen Verbindung mit einem ersten Sekundär-eNB, SeNB, und einem zweiten SeNB;
ein Empfangsmodul (70), ausgelegt zum Empfangen einer RRC-Neukonfigurationsanforderung, gesendet durch den MeNB, gemäß einer ersten Anforderungsbestätigungsnachricht, die durch den ersten SeNB zurückgemeldet wird, und einer zweiten Anforderungsbestätigungsnachricht, die durch den zweiten SeNB zurückgemeldet wird,
wobei die RRC-Neukonfigurationsanforderung Schlüsselaktualisierungsinformationen des ersten SeNB, die aus der ersten Anforderungsbestätigungsnachricht erhalten werden, und Schlüsselaktualisierungsinformationen des zweiten SeNB, die aus der zweiten Anforderungsbestätigungsnachricht erhalten werden, führt; und
ein Aktualisierungsmodul (80), ausgelegt zum Durchführen von Schlüsselaktualisierung für den ersten SeNB durch Berechnen eines Schlüssels S-KeNB1 gemäß den Schlüsselaktualisierungsinformationen des ersten SeNB, die durch das Empfangsmodul (70) erhalten wurden, und eines Datenstrom-Verschlüsselungs-Entschlüsselungs-Schlüssels Kupenc1, der dem ersten SeNB entspricht, und zum Durchführen einer Schlüsselaktualisierung für den zweiten SeNB durch Berechnen eines Schlüssels S-KeNB2 gemäß den Schlüsselaktualisierungsinformationen des zweiten SeNB, die durch das Empfangsmodul (70) erhalten wurden, und eines Datenstrom-Verschlüsselungs-Entschlüsselungs-Schlüssels Kupenc2, der dem zweiten SeNB entspricht.

12. Einrichtung nach Anspruch 11, wobei die Schlüsselaktualisierungsinformationen des ersten SeNB Folgendes umfassen: eine durch den ersten SeNB zugewiesene erste Luftschnittstellenressource, durch den ersten SeNB ausgewählte erste Verschlüsselungsalgorithmusversionsinformationen und einen ersten Zählwert eines SCG-Zählers und den M-KeNB, die zum Berechnen des S-KeNB1 verwendet werden; und
die Schlüsselaktualisierungsinformationen des zweiten SeNB Folgendes umfassen:
eine durch den zweiten SeNB zugewiesene zweite Luftschnittstellenressource, durch den zweiten SeNB ausgewählte zweite Verschlüsselungsalgorithmusversionsinformationen und einen zweiten Zählwert des SCG-Zählers und den M-KeNB, die zum Berechnen des S-KeNB2 verwendet werden.

13. Einrichtung nach Anspruch 12, wobei das Aktualisierungsmodul (80) insbesondere ausgelegt ist zum:
Berechnen des Schlüssels S-KeNB1 des ersten SeNB gemäß dem ersten Zählwert des SCG-Zählers und dem M-KeNB, die in den Schlüsselaktualisierungsinformationen des ersten SeNB geführt werden;
Berechnen des Schlüssels S-KeNB2 des zweiten SeNB gemäß dem zweiten Zählwert des SCG-Zählers und dem M-KeNB, die in den Schlüsselaktualisierungsinformationen des zweiten SeNB geführt werden;
Berechnen des Datenstrom-Verschlüsselungs-Schlüssels Kupenc1, der dem ersten SeNB entspricht, gemäß den ersten Verschlüsselungsalgorithmusversionsinformationen und des S-KeNB1, die in den Schlüsselaktualisierungsinformationen des ersten SeNB geführt werden;
Berechnen des Datenstrom-Verschlüsselungs-Schlüssels Kupenc2, der dem zweiten SeNB entspricht, gemäß den zweiten Verschlüsselungsalgorithmusversionsinformationen und des S-KeNB2, die in den Schlüsselaktualisierungsinformationen des zweiten SeNB geführt werden; und
Durchführen der Schlüsselaktualisierung für den ersten SeNB gemäß des S-KeNB1 und des Kupenc1, und Durchführen der Schlüsselaktualisierung für den zweiten SeNB gemäß dem S-KeNB2 und dem Kupenc2.

## Revendications

1. Procédé d'actualisation de clé de SeNB, comprenant :
l'établissement (101), par un nœud B évolué, Enb, maître, MeNB, d'une connexion de commande de ressources radio, RRC, avec un équipement utilisateur UE, et la détermination d'une première SeNB d'eNB secondaire et d'une seconde SeNB qui sont connectées à l'UE ;
le calcul (102), par la MeNB, d'une clé S-KeNB1 de la première SeNB et d'une clé S-KeNB2 de la seconde SeNB, et l'envoi d'une demande d'ajout de SeNB à la première SeNB et à la seconde SeNB, la demande d'ajout à la première SeNB comportant la S-KeNB1 et la demande d'ajout à la seconde SeNB comportant la S-KeNB2 ;
la réception (103), par la MeNB, d'un premier message d'acquittement de demande correspondant à la demande d'ajout de SeNB qui est renvoyé par la première SeNB, et la réception d'un second message d'acquittement de demande correspondant à la demande d'ajout de SeNB qui est renvoyé par la seconde SeNB ; et
l'envoi (104), par la MeNB, d'une demande de reconfiguration de RRC à l'UE conformément au premier message d'acquittement de demande et au second message d'acquittement de demande, la demande de reconfiguration de RRC comportant des informations d'actualisation de clé de la première SeNB et des informations d'actualisation de clé de la seconde SeNB, de manière à déclencher l'UE pour réaliser une actualisation de clé ; l'envoi, par la MeNB, d'une demande de reconfiguration de RRC à l'UE conformément au premier message d'acquittement de demande et au second message d'acquittement de demande comprenant :
l'obtention, par la MeNB, des informations d'actualisation de clé de la première SeNB à partir du premier message d'acquittement de demande, et l'obtention des informations d'actualisation de clé de la seconde SeNB à partir du second message d'acquittement de demande ; et
l'ajout, par la MeNB, des informations d'actualisation de clé de la première SeNB et des informations d'actualisation de clé de la seconde SeNB à la demande de reconfiguration de RRC, et l'envoi de la demande de reconfiguration de RRC à l'UE, dans lequel
la demande de reconfiguration de RRC est utilisée pour déclencher l'UE pour calculer la S-KeNB1 et une clé de cryptage décryptage de flux de données Kupenc1 correspondant à la première SeNB, ainsi que la S-KeNB2 et une clé de cryptage décryptage de flux de données Kupenc2 correspondant à la seconde SeNB, de manière à activer une procédure de cryptage et décryptage.

2. Procédé selon la revendication 1, dans lequel le calcul, par la MeNB, d'une clé S-KeNB1 de la première SeNB et d'une clé S-KeNB2 de la seconde SeNB comprend :
l'obtention, par la MeNB, d'un compteur de groupes de cellules secondaires, SCG, et d'une clé de MeNB, M-KeNB, et l'utilisation d'une valeur de comptage du compteur SCG et de la M-KeNB comme paramètres d'entrée, pour calculer la clé S-KeNB1 de la première SeNB et la clé S-KeNB2 de la seconde SeNB, dans lequel
la S-KeNB1 est utilisée pour générer une clé de cryptage de flux de données Kupenc 1 correspondant à la première SeNB, et la S-KeNB2 est utilisée pour générer une clé de cryptage de flux de données Kupenc2 correspondant à la seconde SeNB

3. Procédé selon la revendication 2, dans lequel l'utilisation d'une valeur de comptage du compteur SCG et de la M-KeNB comme paramètres d'entrée, pour calculer la clé S-KeNB1 de la première SeNB et la clé S-KeNB2 de la seconde SeNB comprend :
l'obtention d'une première valeur de comptage du compteur SCG, et le calcul de la S-KeNB1 en référence à la M-KeNB ; et
l'obtention d'une seconde valeur de comptage du compteur SCG, et le calcul de la S-KeNB2 en référence à la M-KeNB

4. Procédé selon l'une quelconque des revendications 1 à 3, dans lequel l'envoi d'une demande d'ajout de SeNB à la première SeNB et la seconde SeNB comprend :
l'envoi, par la MeNB, d'une première demande d'ajout de SeNB à la première SeNB en utilisant une interface X2-C, dans lequel la première demande d'ajout de SeNB comporte une capabilité de sécurité de l'UE et la S-KeNB1, de manière à déclencher la première SeNB pour calculer la clé de cryptage décryptage de flux de données Kupenc1 conformément à la capabilité de sécurité de l'UE et à la S-KeNB1 ; et
l'envoi, par la MeNB, d'une seconde demande d'ajout de SeNB à la seconde SeNB en utilisant l'interface X2-C, la seconde demande d'ajout de SeNB comportant la capabilité de sécurité de l'UE et la S-KeNB2, de manière à déclencher la seconde SeNB pour calculer la clé de cryptage décryptage de flux de données Kupenc2 conformément à la capabilité de sécurité de l'UE et à la S-KeNB2.

5. Procédé selon l'une quelconque des revendications 1 à 4, dans lequel les informations d'actualisation de clé de la première SeNB comprennent : une première ressource d'interface radio allouée par la première SeNB, des premières informations de version d'algorithme de cryptage sélectionnées par la première SeNB, et la première valeur de comptage du compteur SCG et la M-KeNB qui sont utilisées pour calculer la S-KeNB1 ; et
les informations d'actualisation de clé de la seconde SeNB comprennent : une seconde ressource d'interface radio allouée par la seconde SeNB, des secondes informations de version d'algorithme de cryptage sélectionnées par la seconde SeNB, et la seconde valeur de comptage du compteur SCG et la M-KeNB qui sont utilisées pour calculer la S-KeNB2.

6. Appareil d'actualisation de clé de SeNB, comprenant :
un module de connexion (10), configuré pour établir une connexion de commande de ressources radio, RRC, avec un équipement utilisateur UE ;
un module de détermination (20), configuré pour déterminer une première SeNB d'eNB secondaire et une seconde SeNB qui sont connectées à l'UE ;
un module de calcul (30), configuré pour calculer une clé S-KeNB1 de la première SeNB déterminée par le module de détermination et une clé S-KeNB2 de la seconde SeNB déterminée par le module de détermination ;
un module d'envoi (40), configuré pour envoyer une demande d'ajout de SeNB à la première SeNB et à la seconde SeNB, la demande d'ajout à la première SeNB comportant la S-KeNB1 et la demande d'ajout à la seconde SeNB comportant la S-KeNB2 ; et
un module de réception (50), configuré pour : recevoir un premier message d'acquittement de demande correspondant à la demande d'ajout de SeNB qui est renvoyé par la première SeNB, et recevoir un second message d'acquittement de demande correspondant à la demande d'ajout de SeNB qui est renvoyé par la seconde SeNB ; dans lequel
le module d'envoi (40) est configuré en outre pour envoyer une demande de reconfiguration de RRC à l'UE conformément au premier message d'acquittement de demande et au second message d'acquittement de demande, la demande de reconfiguration de RRC comportant des informations d'actualisation de clé de la première SeNB et des informations d'actualisation de clé de la seconde SeNB, de manière à déclencher l'UE pour réaliser une actualisation de clé ; le module d'envoi (40) étant configuré spécifiquement pour :
obtenir les informations d'actualisation de clé de la première SeNB à partir du premier message d'acquittement de demande, et obtenir les informations d'actualisation de clé de la seconde SeNB à partir du second message d'acquittement de demande ; et
ajouter les informations d'actualisation de clé de la première SeNB et les informations d'actualisation de clé de la seconde SeNB à la demande de reconfiguration de RRC, et envoyer la demande de reconfiguration de RRC à l'UE, dans lequel
la demande de reconfiguration de RRC est utilisée pour déclencher l'UE pour calculer la S-KeNB1 et une clé de cryptage décryptage de flux de données Kupenc1 correspondant à la première SeNB, ainsi que la S-KeNB2 et une clé de cryptage décryptage de flux de données Kupenc2 correspondant à la seconde SeNB, de manière à activer une procédure de cryptage et décryptage.

7. Appareil selon la revendication 6, dans lequel le module de calcul (30) est configuré spécifiquement pour :
obtenir un compteur de groupes de cellules secondaires, SCG, et une clé de MeNB, M-KeNB, et utiliser une valeur de comptage du SCG et la M-KeNB comme paramètres d'entrée, pour calculer la clé S-KeNB1 de la première SeNB et la clé S-KeNB2 de la seconde SeNB, dans lequel
la S-KeNB1 est utilisée pour générer une clé de cryptage de flux de données Kupenc1 correspondant à la première SeNB, et la S-KeNB2 est utilisée pour générer une clé de cryptage de flux de données Kupenc2 correspondant à la seconde SeNB

8. Appareil selon la revendication 7, dans lequel le module de calcul (30) est configuré spécifiquement pour :
obtenir une première valeur de comptage du compteur SCG, et calculer la S-KeNB1 en référence à la M-KeNB ; et
obtenir une seconde valeur de comptage du compteur SCG, et calculer la S-KeNB2 en référence à la M-KeNB

9. Appareil selon l'une quelconque des revendications 6 à 8, dans lequel le module d'envoi (40) est configuré spécifiquement pour :
envoyer une première demande d'ajout de SeNB à la première SeNB en utilisant une interface X2-C, dans lequel la première demande d'ajout de SeNB comporte une capabilité de sécurité de l'UE et la S-KeNB1, de manière à déclencher la première SeNB pour calculer la clé de cryptage décryptage de flux de données Kupenc1 conformément à la capabilité de sécurité de l'UE et la S-KeNB1 ; et
envoyer une seconde demande d'ajout de SeNB à la seconde SeNB en utilisant l'interface X2-C, dans lequel la seconde demande d'ajout de SeNB comporte la capabilité de sécurité de l'UE et la S-KeNB2, de manière à déclencher la seconde SeNB pour calculer la clé de cryptage décryptage de flux de données Kupenc2 conformément à la capabilité de sécurité de l'UE et la S-KeNB2.

10. Appareil selon la revendication 9, dans lequel les informations d'actualisation de clé de la première SeNB comprennent : une première ressource d'interface radio allouée par la première SeNB, des premières informations de version d'algorithme de cryptage sélectionnées par la première SeNB, ainsi que la première valeur de comptage du compteur SCG et la M-KeNB qui sont utilisées pour calculer la S-KeNB1 ; et
les informations d'actualisation de clé de la seconde SeNB comprennent : une seconde ressource d'interface radio allouée par la seconde SeNB, des secondes informations de version d'algorithme de cryptage sélectionnées par la seconde SeNB, ainsi que la seconde valeur de comptage du compteur SCG et la M-KeNB qui sont utilisées pour calculer la S-KeNB2.

11. Appareil d'actualisation de clé de SeNB, comprenant :
un module de connexion (60), configuré pour : établir une connexion de commande de ressources radio RRC avec un eNB maître, MeNB, et établir une connexion simultanée avec une première SeNB d'eNB secondaire et une seconde SeNB ;
un module de réception (70), configuré pour recevoir une demande de reconfiguration de RRC envoyée par la MeNB conformément à un premier message d'acquittement de demande renvoyée par la première SeNB et un second message d'acquittement de demande renvoyée par la seconde SeNB, la demande de reconfiguration de RRC comportant des informations d'actualisation de clé de la première SeNB obtenues à partir du premier message d'acquittement de demande et des informations d'actualisation de clé de la seconde SeNB obtenues à partir du second message d'acquittement de demande ; et
un module d'actualisation (80), configuré pour réaliser une actualisation de clé pour la première SeNB en calculant une clé S-KeNB1 conformément aux informations d'actualisation de clé de la première SeNB reçues par le module de réception (70) et une clé de cryptage décryptage de flux de données Kupenc1 correspondant à la première SeNB et réaliser une actualisation de clé pour la seconde SeNB en calculant une clé S-KeNB2 conformément aux informations d'actualisation de clé de la seconde SeNB reçues par le module de réception (70) et une clé de cryptage décryptage de flux de données Kupenc2 correspondant à la seconde SeNB

12. Appareil selon la revendication 11, dans lequel les informations d'actualisation de clé de la première SeNB comprennent : une première ressource d'interface radio allouée par la première SeNB, des premières informations de version d'algorithme de cryptage sélectionnées par la première SeNB, ainsi qu'une première valeur de comptage d'un compteur SCG et la M-KeNB qui sont utilisées pour calculer la S-KeNB1 ; et
les informations d'actualisation de clé de la seconde SeNB comprennent : une seconde ressource d'interface radio allouée par la seconde SeNB, des secondes informations de version d'algorithme de cryptage sélectionnées par la seconde SeNB, ainsi qu'une seconde valeur de comptage du compteur SCG et la M-KeNB qui sont utilisées pour calculer la S-KeNB2.

13. Appareil selon la revendication 12, dans lequel le module d'actualisation (80) est configuré spécifiquement pour :
calculer la clé S-KeNB1 de la première SeNB conformément à la première valeur de comptage du compteur SCG et à la M-KeNB qui sont incluses dans les informations d'actualisation de clé de la première SeNB ;
calculer la clé S-KeNB2 de la seconde SeNB conformément à la seconde valeur de comptage du compteur SCG et à la M-KeNB qui sont incluses dans les informations d'actualisation de clé de la seconde SeNB ;
calculer la clé de cryptage de flux de données Kupenc1 correspondant à la première SeNB conformément aux premières informations de version d'algorithme de cryptage et à la S-KeNB1 qui sont incluses dans les informations d'actualisation de clé de la première SeNB ;
calculer la clé de cryptage de flux de données Kupenc2 correspondant à la seconde SeNB conformément aux secondes informations de version d'algorithme de cryptage et à la S-KeNB2 qui sont incluses dans les informations d'actualisation de clé de la seconde SeNB ; et
réaliser l'actualisation de clé pour la première SeNB conformément à la S-KeNB1 et la Kupenc1, et réaliser l'actualisation de clé pour la seconde SeNB conformément à la S-KeNB2 et la Kupenc2.
